# EUROPEAN PATENT SPECIFICATION

(11) **EP 4 066 522 B1**
(45) Date of publication and mention of the grant of the patent: **19.06.2024**
(21) Application number: 20819843.2
(22) Date of filing: 26.11.2020
(51) Int. Cl.: H04W 4/80, H04W 4/021, H04W 4/02

(54) **ACCESS CONTROL SYSTEM AND METHOD**
ZUGANGSSTEUERUNGSSYSTEM UND -VERFAHREN
SYSTÈME ET PROCÉDÉ DE CONTRÔLE D'ACCÈS

(30) Priority: 28.11.2019 GB 201917365; 28.11.2019 GB 201917328; 28.11.2019 GB 201917371; 28.11.2019 GB 201917329; 28.11.2019 GB 201917375
(43) Date of publication of application: 05.10.2022
(73) Proprietor: Paxton Access Limited, Brighton, Sussex BN1 9HU (GB)
(72) Inventor: HOGGAT, Mark, Brighton East Sussex BN1 9HU (GB); INNES, Sam, Brighton East Sussex BN1 9HU (GB)
(74) Representative: IK-IP LTD
(86) International application number: PCT/GB2020/053013
(87) International publication number: WO 2021/105683

(56) References cited:
- WO-A1-2018/226600
- KR-A- 20180 055 159

## Description

### FIELD OF THE INVENTION

The present application relates to access control. In particular, the application relates to controlling access or entry points on the basis of communications sent to or from mobile devices.

### BACKGROUND OF THE INVENTION

Access control systems which use mobile devices, such as keyfobs or smartcards are known. Readers at or near access or entry points (such as doors or gates) can be used to read credentials (e.g. using magnetic stripes or RFID) from access devices and to make access control decisions based on those credentials.

There is a desire to improve the way access requests and decisions are made to create a more efficient and seamless process for the user and a more secure system to improve security.

WO 2018/226600 relates to a parking objects or vehicles detection system which uses BLE proximity sensing to identify a vehicle with a beacon ID to within about one vehicle length from an access gate of a vehicle parking surface lot or garage. The system performs vision-based parking inventory management by monitoring live vehicle ingress and egress traffic and communicating to a backend server changes in instances of vehicle parking events.

KR 20180055159 describes a door lock device using a smart phone. The device includes: a locking unit which includes an actuator capable of setting the locking and unlocking of a door and is installed in the door; a beacon capable of recognizing the smart phone of a user located in a short distance; and an IOT platform for wirelessly communicating with the smart phone to provide a driving signal to the locking unit. When the smart phone is wirelessly connected to the beacon, the smart phone provides the driving signal for the unlocking to the IOT platform. When the wireless connection with the beacon is released, the smart phone provides the driving signal for setting the locking to the IOT platform.

### SUMMARY OF THE INVENTION

Aspects of the invention are set out in the independent claims and preferable features are set out in the dependent claims.

There is described herein a method for implementing access control using a mobile device configured to generate access requests, the method comprising detecting a status change of the mobile device, upon detecting a status change of the mobile device, triggering logic on the mobile device into a state to monitor for receipt of one or more access control beacons, receiving an access control beacon from an access control device, generating an access request based on the received access control beacon and transmitting the access request over a wireless communication interface of the mobile device.

Conventional access systems allow credentials to be read from mobile devices, such as keyfobs or smartcards. However by providing more advanced mobile devices with access control capabilities, it is possible to provide more functionalities and provide an improved access system. When providing access control from a mobile device, if the mobile device is constantly searching for beacons the power consumption is higher than when beacons are searched for rarely. In order to provide a more seamless user experience it is preferable to provide means for transitioning the mobile device into a monitoring state without receiving direct user interaction (e.g. deliberate interaction from a user, such as selecting options on a user interface or opening an access control application on the mobile device). In access control, since the mobile device is carried by a user, who generally will be active in some way (e.g. moving towards an access point), or there will be other detectable changes in the user's environment, before the user requires access to the access point. Resultant changes in the state of the mobile device occur and these can be used to trigger searching for beacons. This can provide reductions in energy consumption.

The access control preferably relates to entry point access control, for opening or allowing access via entry points such as doors, gates, locks etc.

Preferably detecting a status change of the mobile device comprises determining that the mobile device is not stationary. Thus the method may further comprise, upon determining that the mobile device is not stationary, triggering logic on the mobile device into a state to monitor for receipt of one or more access control beacons.

Preferably determining that the mobile device is not stationary comprises receiving motion data from an accelerometer, gyroscope, magnetometer or barometer of the mobile device and determining that the received motion data is indicative of movement.

Preferably, determining that the mobile device is not stationary comprises receiving location data of the mobile device and determining from the received location data that the mobile device is moving.

For example, determining that the mobile device is moving may comprise determining that the location of the mobile device has changed by more than a predetermined distance and/or at more than a predetermined rate. The location data could be one or more of geolocation, e.g. GPS, data derived from local wireless networks, such as WLAN, e.g. Wi-Fi (IEEE 802.11), high-rate wireless PAN (IEEE 802.15.3), e.g. ultra-wideband, Zigbee etc. (IEEE 802.15.4).

Preferably, detecting a status change of the mobile device comprises detecting the mobile device has crossed a geofence.

In some embodiments, detecting a status change of the mobile device comprises receiving sound data from a microphone of the mobile device, comparing the received sound data to a predetermined sound signature and determining that the sound data matches a predetermined sound signature.

Preferably the received sound data is outside the audible range, e.g. ultrasonic. This provides an improved user experience.

Preferably the method further comprises transmitting a predefined sound from a device located at or near an access point; and determining the received sound data to a predetermined sound signature comprises identifying the sound data as indicative of the transmitted predefined sound.

Preferably the device located at or near an access point is triggered to transmit the predefined sound upon detecting a user interaction. The user interaction could be, for example, the user interacting with the device, e.g. by pressing a button, touching a touchscreen, or the user's motion being detected with a motion detector.

There is also described herein a method for implementing access control using a mobile device configured to generate access requests, the method comprising periodically monitoring, at the mobile device, for receipt of one or more access control beacons at predetermined monitoring intervals; receiving an access control beacon from an access control device; generating an access request based on the received access control beacon; and transmitting the access request over a wireless communication interface of the mobile device.

By only monitoring for beacons periodically, energy consumption can be reduced compared to monitoring constantly.

Preferably the method further comprises determining the location, e.g. geolocation, of the mobile device and adjusting the monitoring intervals based on the determined location.

For example, the method may further comprise calculating the distance between the mobile device and a premises to be accessed and the monitoring intervals may be adjusted based on the distance. The premises to be accessed may also be defined as a premises having at least one access control device or as a premises which can be controlled by the access requests from the mobile device. Such premises may be associated with the mobile device and/or the user of the mobile device.

Preferably determining the location comprises determining the mobile device has crossed a geofence and adjusting the monitoring intervals based on the determined location comprises setting the monitoring intervals to different predetermined values for each side of the geofence.

The geofence may be, for example, centred on a premises which can be controlled by the access requests from the mobile device. For example the geofence may be between around 25m and 5km from the premises. In some embodiments, the geofence is at least 50m from the premises and/or not more than 1km. Thus monitoring for beacons need only happen when the mobile device is likely to be within range of beacons which can trigger an access request at the mobile device.

Preferably monitoring for receipt comprises monitoring for receipt for a monitoring time period, preferably wherein the monitoring time period is substantially smaller than the predetermined monitoring intervals.

Preferably the predetermined monitoring intervals are at least 5 seconds in length and not more than 30 minutes in length, preferable at least 20 seconds and/or not more than 20 minutes.

Preferably the mobile device has an application for generating access requests, the application having at least one active state and at least one inactive state, and wherein monitoring for receipt of one or more access control beacons and/or generating the access request is performed by the application.

Preferably the mobile device has an operating system and wherein detecting a status change of the mobile device is performed by the operating system.

Preferably wherein upon detecting a status change of the mobile device, the method comprises causing the application to transition from an inactive to an active state.

Preferably the access control beacons are wireless beacons, for example short range wireless beacons such as Bluetooth (IEEE 802.15.1), Bluetooth Low Energy, or iBeacons.

A short range wireless beacon can be wireless communication with a range of less than 100m, preferably less than 50m or less than 20m. The wireless beacons may have a range of less than 10m, for example to reduce the number of wireless beacons received by a mobile device at a premises with multiple access points.

Optionally, the access control beacon comprises an identifier (or encrypted or hashed version thereof) of the access control device; and generating an access request is based on the identifier (or encrypted or hashed version thereof) of the access control device.

Preferably generating an access request is based on an identifier of the mobile device or of the user of the mobile device.

There is also described a computer-readable medium comprising instructions which, when executed by a computer, cause the computer to carry out the method substantially as described above.

There is also described a mobile device comprising: a memory, preferably storing an identifier of the mobile device and/or an access control application for generating access requests; a communication interface; and a processor; wherein the mobile device is configured to perform the method substantially as described above.

There is also described an access control system comprising: a mobile device according as described above; and an access control device comprising: a memory; a communication interface; and a processor; preferably wherein the access control device is configured to transmit access control beacons.

There is also described herein: a method for implementing access control using a mobile device capable of communicating over a first wireless communication protocol and a second wireless communication protocol, and being configured to generate access requests, the method comprising, periodically determining whether the mobile device is able to communicate over the first wireless communication protocol, based on the determining, setting at least one status flag, receiving a trigger for an access request at the mobile device, upon receiving the trigger, generating an access request at the mobile device, selecting a communication protocol from the first and second wireless communication protocols based on the previously set status flag and sending the access request to an access control device using the selected wireless communication protocol.

By setting a flag, it is possible to make the selection of which wireless protocol to use very quickly at the mobile device, which can improve the responsiveness of the system.

Conventional access systems allow credentials to be read from mobile devices, such as keyfobs or smartcards. However by providing more advanced mobile devices with access control capabilities, it is possible to provide more functionalities and provide an improved access system.

Communications over short-range wireless interfaces can be slow, e.g. Bluetooth and RFID may take around 1-3 seconds to be transmitted, received and processed. This delay provides a poor user experience. By providing a mobile device that can send access requests over a different interface, e.g. using a communication protocol with higher bandwidth such as WiFi or cellular, it is possible to improve access time.

However, such communication routes may not always be available. One option is to attempt to send access requests via multiple communication channels at the same time, e.g. short-range communication such as Bluetooth as well as long-range via the Internet, such as cellular. However this uses up unnecessary bandwidth and power. Alternatively, attempts could be made to send access requests via different communication routes in order, e.g. sent consecutively. However this means if the first route fails, the user could experience considerable delay. By providing a determination as to whether communication is available by one route, and storing a flag indicative of this determination, it is possible to make a decision quickly as to which is the best communication route to use, saving time and resources.

When access requests can be transmitted to the access controller via a long-range communication method (as opposed to directly to the controller via short-range communication in the vicinity of the entry point), it is possible for malicious access requests to arrive at the access controller from devices that are not actually at the access point. Therefore security may be compromised. Accessing computer systems, such as logging onto a website, often takes into account multiple factors, such as the location or IP address from which the request originates. However in building or entry control, this has generally not been required due to the presupposed criteria that the requester is actually physically present at the premises. Therefore further levels of authentication can be helpful in reducing the security risk.

Preferably the status flag denotes the availability of communication over the first wireless communication protocol; and wherein selecting a communication protocol comprises selecting the first wireless communication protocol if the status flag denotes the first wireless communication protocol is available, regardless of whether or not the second wireless communication protocol is available.

Preferably the first wireless communication protocol is a high bandwidth wireless communication protocol and the second wireless communication protocol is a low bandwidth wireless communication protocol.

The bandwidth refers to the bit-rate. The high bandwidth may, for example, be selected from mediums or protocols including cellular and Wi-Fi (IEEE 802.11). The low bandwidth could be one of Bluetooth, Bluetooth low energy (BLE) or Near Field Communication (NFC).

The high bandwidth medium/protocol may have a bandwidth of at least 2 Mbps, or at least 3 Mbps, more preferably at least 5 Mbps or at least 10Mbps. For example, Wi-Fi (IEEE 802.11) generally has a bandwidth of around 11 Mbps and 4G LTE cellular networks can handle bandwidths of around 10-20 Mbps and 4G LTE-Advanced can handle bandwidth speeds of around 25-40Mbps.

The low bandwidth medium/protocol may have a bandwidth of less than 3 Mbps or 2 Mbps, more often not more than around 1.5 Mbps or 1 Mbps. For example, Bluetooth generally has a bandwidth of around 800Kbps.

Preferably the first wireless communication protocol provides an Internet Protocol-(IP-) based network link and the second wireless communication protocol provides a short-range data link, and wherein determining whether the mobile device is able to communicate over the first wireless communication protocol comprises determining whether the mobile device is able to communicate over the IP-based network link.

The short range data link may use a communication protocol with a wireless range of less than 200m or less than 100m, sometimes even less than 50m or 40m. For example Bluetooth, BLE or NFC.

The Internet Protocol- (IP-) based network link may be provided using a long range communication protocol, such as protocols with a range of at least 40m, preferably at least 50m or at least 100m. For example, WLAN or WiFi may be used. In other examples, the long range communication protocol may be capable of longer range communication, such as at least 400m or at least 500m or at least 1km. For example the long range communication protocol could be cellular communication, e.g. GSM, CDMA, 3G, 4G, 5G, 3GPP etc.

Preferably the first wireless communication protocol is selected from cellular and Wi-Fi and the second wireless communication protocol is selected from Bluetooth, BLE or NFC.

Preferably periodically determining whether the mobile device is able to communicate over the first wireless communication protocol comprises attempting to send a test message from the mobile device using the first wireless communication protocol and monitoring for receipt of an acknowledgement of the test message at the mobile device.

The test message is sent to a server of an access control system. For example, the test message may be addressed to a server of an access control system. The server may be a remote server, e.g. be located on a cloud system or remote from the premises for which access is being provided. In some cases the server is located at the premises, but remote from the access point. The server is generally a different device to the access control device to which the access request is sent. The access control device to which the access request is sent may, for example, be a reader or controller at the access point, for example having logic to control the opening and closing and/or locking and unlocking of a door or gate at the access or entry point. The method can thus further comprise the server receiving the test message from the mobile device and sending an acknowledgement of the test message to the mobile device. The acknowledgement of the test message may or may not be sent via the same path (e.g. using the same network path and/or wireless protocols) as the test message is sent over from the mobile device.

Preferably the method further comprises, if an acknowledgement of the test message is not received at the mobile device within a predetermined test time period, waiting a predetermined test interval period before attempting to send a further test message from the mobile device using the first wireless communication protocol.

Thus the mobile device may periodically send test messages, and wait a certain time period if no acknowledgement is received (e.g. if there is no connection via the first wireless communication protocol), which can reduce power consumption, rather than continually attempting to send a test message. The predetermined test interval period may, for example, be at least 10 minutes, at least 20 minutes or at least 40 minutes. The predetermined test interval period is likely to be less than 24 hours, preferably less than 12 hours, more preferably less than 8 hours or 4 hours.

For example, where an access control application is used on the mobile device, the application may generate and send the test message and if an acknowledgement is not received within the predetermined test period, transition to an inactive or suspended or terminated state. The application can then transition into an active (foreground or background) state after the predetermined test interval period in order to send a further test message.

Preferably periodically determining whether the mobile device is able to communicate over the first wireless communication protocol comprises monitoring for receipt of a test message from an access server at the mobile device.

The test message from the server may be sent to one particular mobile device, or may be a broadcast message to all devices in the area, e.g. broadcast over a local network at the premises where access is being provided.

Preferably the status flag is reset or expires after a predetermined time period. The predetermined time period may be, for example, at least 1 minute and not more than 4 hours. In some embodiments the predetermined time period is at least 2 minutes or at least 5 minutes and/or is not more than 2 hours or not more than 1 hour. In some embodiments the predetermined time period is additionally or alternatively not more than 30 minutes.

In some embodiments, periodically determining whether the mobile device is able to communicate over the first wireless communication protocol comprises: attempting to send a first test message from the mobile device using the first wireless communication protocol, monitoring for receipt of an acknowledgement of the first test message received over the first wireless communication protocol at the mobile device and upon receiving an acknowledgement of the first test message, monitoring for receipt of one or more second test messages received over the first wireless communication protocol at the mobile device; and wherein the step of setting at least one status flag comprises setting the at least one status flag upon receiving the acknowledgement of the first test message and updating the at least one status flag upon receiving the acknowledgement of each of the one or more second test messages.

By using a first test procedure that requires a round trip comprising a test message from the mobile device followed by an acknowledgement message to the mobile device initially and then a second test procedure that only requires a test message to be received at the mobile device, it is possible to reduce the amount of network bandwidth used and power consumption compared to other networks. The first test procedure can signal to, e.g., a control server, that the mobile device requires the status flag to be updated (e.g. it may be indicative of the mobile device being at or near the access premises), whilst the second test procedure ensures the status flag is kept up-to-date in case of changes in the connectivity over the first protocol.

Updating the status flag may comprise setting resetting a timer, for example when a status flag is reset or expires after a predetermined status expiry time period.

Optionally, the method further comprises: repeating the steps of attempting to send a first test message and monitoring for receipt of an acknowledgement of the first test message at time intervals of a first test interval length.

The first test may thus be repeated at predetermined time intervals. For example, the server (or other device) which is sending the second test messages may only send a predetermined number of second test messages or send second test messages for a predetermined second test time period in response to receiving a first test message. The first test interval length is, in some embodiments, similar to or at least as long as the predetermined time period at which the flag is reset or expires. Thus the first test interval length may be, for example, at least 1 minute and not more than 12 hours. In some embodiments the first test interval length is at least 2 minutes or at least 5 minutes and/or is not more than 3 hours or not more than 1 hour. In some embodiments the first test interval length is additionally or alternatively at least 30 minutes.

Preferably the method further comprises: receiving the first test message from the mobile device at a remote server, upon receiving the first test message, transmitting an acknowledgement of the first test message from the remote server to the mobile device, and subsequently transmitting a second test message from the remote server to the mobile device.

Preferably the method also comprises repeating the step of transmitting a second test message from the remote server to the mobile device for a predetermined time period or a predetermined number of times.

Preferably determining whether the mobile device is able to communicate over the first wireless communication protocol comprises attempting to send a test message from the mobile device using the first wireless communication protocol and wherein attempting to send a test message from the mobile device is triggered by the mobile device detecting it is located at or within a predetermined distance of a premises for which access can be controlled based on access requests generated by the mobile device.

Preferably receiving a trigger for an access request comprises receiving an access control beacon from an access control device over the second wireless communication protocol.

The access request may be sent from the mobile device to the access control device via an access control server (normally when the first protocol is selected, but not when the second protocol is selected), and the method may further comprise: receiving, at the access control server, the access request from the mobile device; and transmitting, from the access control server, the access request to the access control device or to a plurality of access control devices including the access control device.

The mobile device can have an application for generating access requests, the application having at least one active state and at least one inactive state, and wherein monitoring for receipt of one or more access control beacons and/or generating the access request is performed by the application

There is also described: a computer-readable medium comprising instructions which, when executed by a computer, cause the computer to carry out the method substantially as described above.

There is also described: a mobile device comprising: a memory, preferably storing an identifier of the mobile device and/or an access control application for generating access requests; a communication interface; and a processor; wherein the mobile device is configured to perform the substantially as described above.

There is also described: an access control system comprising: a mobile device as described above; and at least one access control device comprising: a memory; a communication interface; and a processor; preferably wherein the access control device is configured to transmit access control beacons.

The system may further comprise: an access control server comprising: a memory; a communication interface; and a processor; wherein the access control server is configured to receive access requests from the mobile device and send the received access requests to at least one of the at least one access control devices.

There is also described herein a method for implementing access control using a mobile device configured to generate access requests, the method comprising, receiving an access request from the mobile device, the access request comprising an identifier indicative of an access point to be accessed, determining at least one parameter associated with the mobile device and/or the access point and assigning an authenticity level to the access request based on the access point to be accessed and the at least one parameter.

Conventional access systems allow credentials to be read from mobile devices, such as keyfobs or smartcards. However by providing more advanced mobile devices with access control capabilities, it is possible to provide more functionalities and provide an improved access system.

Communications over short-range wireless interfaces can be slow, e.g. Bluetooth and RFID may take around 1-3 seconds to be transmitted, received and processed. This delay provides a poor user experience. By providing a mobile device that can send access requests over a different interface, e.g. using a communication protocol with higher bandwidth such as WiFi or cellular, it is possible to improve access time.

However, such communication routes may not always be available. One option is to attempt to send access requests via multiple communication channels at the same time, e.g. short-range communication such as Bluetooth as well as long-range via the Internet, such as cellular. However this uses up unnecessary bandwidth and power. Alternatively, attempts could be made to send access requests via different communication routes in order, e.g. sent consecutively. However this means if the first route fails, the user could experience considerable delay. By providing a determination as to whether communication is available by one route, and storing a flag indicative of this determination, it is possible to make a decision quickly as to which is the best communication route to use, saving time and resources.

When access requests can be transmitted to the access controller via a long-range communication method (as opposed to directly to the controller via short-range communication in the vicinity of the entry point), it is possible for malicious access requests to arrive at the access controller from devices that are not actually at the access point. Therefore security may be compromised. Accessing computer systems, such as logging onto a website, often takes into account multiple factors, such as the location or IP address from which the request originates. However in building or entry control, this has generally not been required due to the presupposed criteria that the requester is actually physically present at the premises. Therefore determining authenticity levels can provide further levels of authentication that can be helpful in reducing the security risk.

Preferably the access request comprises location data indicative of the location of the mobile device and wherein determining the at least one parameter comprises determining the location of the access point; and wherein the method further comprises, comparing the location of the mobile device with the location of the access point; and wherein assigning an authenticity level to the access request is based on the comparison of the location.

By using the comparison of the location of the mobile device and the access point to assess authenticity, it is possible to prevent allowing access requests from devices that are clearly not at or near the access or entry point in question. Conventionally, access requests have been made by transferring data over short-range wireless protocols, such as BLE or NFC, from a mobile access device (e.g. fob) directly to a reader at the access point. This in itself provides validation that the request originates from a user at or near the entry point. However, where access requests may be received via longer-range communications (e.g. via Wi-Fi, cellular and/or the Internet), providing this check is another validation that can prevent malicious access requests from being accepted. For example, a malicious device may be able to "sniff" an access beacon or advert (e.g. BLE Beacon) from an access device at the access point and re-play the advert (e.g. via the Internet) to an authorised mobile device that is remote from the access point. The remote mobile device phone would then generate an access request and send the access request to the access point via the Internet, resulting in the access point opening. By requiring the mobile device to include its location in the access request and assigning an authenticity level to the access request based on the location it is possible to prevent this sort of attack.

Preferably comparing the location of the mobile device with the location of the access point comprises determining the distance between the access point and the mobile device, and assigning an authenticity level to the access request comprises comparing the distance between the access point and the mobile device to one or more threshold distances and selecting an authenticity level from a plurality of authenticity levels based on the comparison with the one or more threshold distances. The threshold distances may be, for example, between around 50cm and 10m. In some embodiments the comparison may be made with a first threshold distance and also with a second threshold distance, wherein the first threshold distance is smaller than the second threshold distance. If the comparison indicates the mobile device is less than or equal to the first threshold distance from the access point, a first authenticity level may be assigned. If the comparison indicates the mobile device is more than the first threshold distance and less than or equal to the second threshold distance, a second authenticity level may be assigned. The second authenticity level may indicate the access request is less likely to be an authentic, or legitimate, access request (e.g. from an authorised user) than the first authenticity level. If the second authenticity level is assigned, a challenge procedure may be initiated, for example to further verify the identity of the requester. If the comparison indicates the threshold distance is larger than the second threshold distance, a third authenticity level may be assigned to the access request. The third authenticity level may indicate the request is unlikely to be an authentic or genuine request. In some embodiments, upon assigning a third authenticity level to the request, the access request may be refused, or not allowed. The first threshold distance can be between around 50cm and 3m, preferably between around 50cm and 2m. The second threshold distance can be between around 1m and 10m, more preferably at least 2m or 3m, sometimes between around 3m and 8m or 6m.

Preferably the location data indicative of the location of the mobile device comprises one or more of geolocation data and data derived from a wireless local area network.

For example, the location data could be one or more of geolocation, e.g. GPS, data derived from local wireless networks, such as WLAN, e.g. Wi-Fi (IEEE 802.11), high-rate wireless PAN (IEEE 802.15.3), e.g. ultra-wideband, Zigbee etc. (IEEE 802.15.4). Wireless local area network data may a use received signal strength indication (RSSI) of one or more wireless signals at the mobile device and a comparison with the location of one of more wireless access points to identify the location.

Preferably the at least one parameter associated with the mobile device and/or the access point comprises a historical measure based on a plurality of previous access requests generated by the mobile device or on behalf of a user associated with the mobile device. The historical measure may be based on at least three or at least five previous access requests, more preferably at least 10 previous access requests.

Preferably the access point to be accessed is one of a plurality of access points at a premises, and wherein determining at least one parameter associated with the mobile device and/or the access point comprises receiving data indicative of a previous access request generated by the mobile device, the previous access request relating to one of the plurality of access points assigning an authenticity level to the access request based on the identification of the access point to be accessed and the previous access point.

Preferably determining at least one parameter associated with the mobile device and/or the access point comprises receiving step data indicative of the number of steps taken by a user holding the mobile device between the time of the previous access request and the time of the access request and assigning an authenticity level to the access request is based on the received step data and a determination of the distance between the access point of the previous request and the access point to be accessed.

Step data may be derived at the mobile device based movement detected by an integrated accelerometer of the mobile device and/or received from an accelerometer on a separate device that can be linked to the mobile device, such as a pedometer or smart watch, e.g. Fitbit etc.

Preferably the access request and the previous access request each comprise location data indicative of the location of the mobile device and wherein assigning the authenticity level to the access request is based on location data indicative of the location of the mobile device at the time of the previous access request and the time of the access request and/or the distance moved by the mobile device between the time of the previous access request and the time of the access request.

The time of the previous access request (first access request) and the access request (second access request) can be the time each access request was generated, the time each request was transmitted from the mobile device or the time each request was received from the mobile device. Location data may be based on geolocation or wireless network location data.

Preferably the method further comprises determining the distance between the access point to be accessed and the access point of the previous access request and wherein assigning an authenticity level to the second access request is based on the determined distance. Preferably the method further comprises making an access control decision based on the assigned authenticity level.

Preferably making the access control decision is selected from the group comprising not authorising access to the access point based on the access request and allowing access to the access point based on the access request. Allowing access may comprise unlocking and/or opening a barrier at the access point, e.g. a door or a gate.

Preferably the method further comprises initiating an access challenge procedure based on the assigned authenticity level. Preferably initiating a challenge procedure comprises: sending a request for further information to the mobile device.

The challenge procedure may comprise sending a request for further information from the mobile device. For example a user identification code (e.g. password or PIN) may need to be entered and/or user biometric data may need to be provided (e.g. a fingerprint or photo of the user's face for face recognition).

Preferably the method further comprises, after sending a request for further information to the mobile device, receiving the further information from the mobile device and checking the received information against a set of stored access credential information.

Access control decisions may be further based on this check. For example, if the result of the check is that the received information matches (or matches to a sufficient extent) the set of stored access credential information, access may be provided/allowed.

Preferably the method further comprises updating the authenticity level for the access request based on whether the received information matches the set of stored access credential information.

Preferably the method further comprises selecting the set of stored access credential information from a plurality of sets of stored access credential information based on an identifier in the access request.

The mobile device may have an application for generating access requests, the application having at least one active state and at least one inactive state, and the access request may be generated by the application.

In some embodiments, the access request is received from the mobile device via device-to-device communication. In other embodiments, the access request is received from the mobile device via an access control server, and the method further comprises: receiving, at the access control server, the access request from the mobile device; and transmitting, from the access control server, the access request to a plurality of access control devices or to a plurality of access control devices including the access control device.

The access request may have been generated (at the mobile device) based on an identifier (or encrypted or hashed version thereof) of an access control device, preferably wherein the access request is generated in response to receiving, at the mobile device, an access control beacon comprises the identifier (or encrypted or hashed version thereof) of the access control device. Thus the access request may comprise the identifier (or encrypted or hashed version thereof). In some embodiments, a beacon may comprise an encrypted version of the identifier, but the mobile device may decrypt this so the access request comprises the unencrypted identifier of the access control device. This may be particularly helpful when access requests are sent via a server (e.g. not directly to the access control device).

In some embodiments, the method comprises raising an alert based on the authenticity level. Raising an alert could comprise sending an alert message to a system operator, e.g. by sending to a device assigned to a system operator, such as a computer or mobile device. Raising an alert could comprise sounding an alarm.

There is also described herein: a computer-readable medium comprising instructions which, when executed by a computer, cause the computer to carry out the method substantially as described above.

There is also described: an access control system comprising: at least one access control device or access control server comprising: a memory; a communication interface; and a processor; wherein the at least one access control device or access control server is configured to perform the method substantially as described above.

The access control system may further comprise: at least one access control device comprising: a memory; a communication interface; and a processor; wherein the at least one access control device or access control server is configured to perform the method substantially as described above; and an access control server comprising: a memory; a communication interface; and a processor; wherein the access control server is configured to receive access requests from the mobile device and send the received access requests to at least one of the at least one access control devices.

The access control system may further comprise one or more mobile devices for generating and sending access requests.

There is also described herein a method for implementing access control using a mobile device configured to generate access requests, the method comprising, generating, at an access control device associated with an access point, a single access beacon code from an identifier of the access control device or access point and a time-varying identifier using a hashing or encryption algorithm, transmitting, from the access control device, an access beacon comprising the access beacon code, receiving, at the access control device, an access request from the mobile device, determining whether the access request comprises the access beacon code or the time-varying identifier (or an encrypted or hashed version thereof) and determining the validity of the access request based on the determination of whether the access request comprises the access beacon code or the time-varying identifier.

By using a hashing or encryption algorithm to create a single code from an identifier of the access device and an element that varies with time it is possible to provide improved security because the access beacon code will change over time and so this can prevent replay attacks. Furthermore, the identifier of the access control device will not be discoverable by devices that do not have knowledge of the encryption or hashing algorithm.

Conventional access systems allow credentials to be read from mobile devices, such as keyfobs or smartcards. However by providing more advanced mobile devices with access control capabilities, it is possible to provide more functionalities and provide an improved access system.

Communications over short-range wireless interfaces can be slow, e.g. Bluetooth and RFID may take around 1-3 seconds to be transmitted, received and processed. This delay provides a poor user experience. By providing a mobile device that can send access requests over a different interface, e.g. using a communication protocol with higher bandwidth such as WiFi or cellular, it is possible to improve access time.

When access requests can be transmitted to the access controller via a long-range communication method (as opposed to directly to the controller via short-range communication in the vicinity of the entry point), it is possible for malicious access requests to arrive at the access controller from devices that are not actually at the access point. Therefore security may be compromised. Accessing computer systems, such as logging onto a website, often takes into account multiple factors, such as the location or IP address from which the request originates. However in building or entry control, this has generally not been required due to the presupposed criteria that the requester is actually physically present at the premises. Therefore further levels of authentication can be helpful in reducing the security risk.

Access requests may identify the access/entry point in question by including an identifier of the access point or access point controller/reader, for example having obtained it from the reader itself. However, it may be possible to detect, spoof and replay previous genuine access requests and thus for unauthorised parties to gain entry or access. Therefore some systems include the access point identifier as well as a counter or rolling number that changes over time to identify the access point, so any requester must have obtained this from the access/entry point. However, it may still be possible to infer details about the access point from such a communication. By providing a single code, created from an access or entry point identifier and a changing (or time-varying) number, security can be improved.

The method may also comprise, preferably at the access control device, repeating the steps of generating a single access beacon code from the identifier of the access control device or access point and a time-varying identifier using a hashing or encryption algorithm and transmitting, from the access control device, an access beacon comprising the access beacon code.

For each subsequent repetition of the generation step the time-varying identifier is different and so the access beacon code generated each time is also different. Each time a new code is generated, that new code will be transmitted in a beacon. In some embodiments, access beacons will be transmitted more frequently than codes are generated, and thus multiple beacons can be transmitted having the same access beacon code.

Preferably the method further comprises storing each of the generated access beacon codes or each of the time-varying identifiers along with the associated code generation or transmission time for each code, wherein the step of determining whether the access request comprises the access beacon code or the time-varying identifier (or an encrypted or hashed version thereof) comprises determining whether the access request comprises one of the stored access beacon codes or the time-varying identifiers (or an encrypted or hashed version thereof) and wherein determining the validity of the access request is based on the determination of whether the access request comprises one of the stored access beacon codes or time-varying identifiers (or an encrypted or hashed version thereof).

Preferably determining the validity of the access request is based on the code generation or transmission time associated with the access code. Thus in some embodiments only recently generated codes may be accepted. For example, there may be a time threshold beyond which each access beacon code or time-varying identifier is no longer accepted. The time threshold may be between around 2 seconds and 5 minutes, more preferably between around 3 or 5 seconds and 3 minutes.

In some embodiments the step of generating a single access beacon code is repeated with a different time-varying identifier at predetermined generation intervals.

Alternatively or additionally the step of generating a single access beacon code is repeated with a different time-varying identifier in response to receiving an access request or determining an access request is valid.

If the access beacon code changes periodically, patterns may be inferred, so it may be better to change the access beacon code in response to successful access requests.

In some embodiments, alternatively or additionally, the step of generating a single access beacon code is repeated with a different time-varying identifier in response to receiving a user interaction at the access control device.

For example, the access control device (e.g. a reader or controller) may comprise a user interface with one or more buttons, or switches, a touchscreen or a motion sensor. A user interaction at the user interface can cause the access control device to generate a new access beacon code. In some embodiments, the access control device only transmits beacons in response to such user interaction, e.g. a predetermined number of beacons or transmitting beacons for a predetermined time period.

This can help with power consumption and security, since there has to be a user present at the access or entry point to trigger the beacon.

Preferably the hashing or encryption algorithm is an irreversible hashing algorithm, and wherein determining whether the access request comprises the access beacon code or the time-varying identifier comprises determining whether the access request comprises the access beacon code.

Since the access beacon code was generated using an irreversible hashing algorithm, the mobile device cannot invert it to find the time-varying code and must simply return the access beacon code in the access request. This is useful in preventing a replay attack, and may speed up generation of the access request since the mobile device does not have to decrypt the beacon code.

Preferably the access request is received from the mobile device via device-to-device communication. Thus the mobile device and access control device are in direct communication and the access request does not need to pass through any other device to reach the access control device, such as a base station (for cellular communications) or a wireless access point (for WLAN communications). Example device-to-device protocols where the two devices are in direct communication with one another include Bluetooth, Bluetooth Low Energy and NFC.

In other embodiments, the access request is sent from the mobile device to an access control server, the method further comprising, receiving, at the access control server, the access request from the mobile device and transmitting, from the access control server, the access request to a plurality of access control devices.

Thus the access control device will act only on requests that contain the access beacon code or time-varying identifier for that particular access control device. Other access requests may be ignored. Advantageously, neither the mobile device nor the server needs to identify the access control device so a hashed access beacon code can be used, which may improve security.

Preferably wherein the access request comprises the access beacon code (or an encrypted version thereof), the method further comprising identifying, at the access control server, one of the access control devices to which to send the access request based on the access beacon code in the access request and sending the access request from the access control server to the identified access control device.

Optionally the method further comprises: sending, from the access control device to the access control server, the generated access beacon code(s) and an identifier of the access control device storing, at the access control server, a link or mapping between the access beacon code(s) and the identifier of the access control device and wherein identifying, at the access control server, one of the access control devices to which to send the access request is performed by matching the access beacon code in the access request to the identifier of the access control device.

Preferably the hashing or encryption algorithm is a reversible encryption algorithm. Preferably the access request from the mobile device comprises the identifier of the access control device (or an encrypted version thereof); and wherein the method further comprises transmitting, from the access control server, the access request to the access control device based on identifying the identifier of the access control device in the access request.

Since the access beacon code can be decrypted, the mobile device may decrypt the code to find the identifier of the access control device and include the access control device identifier in the access request.

In some embodiments, the access request is only determined as valid if the access request includes the time-varying identifier, or an encrypted version thereof that is different from the access beacon code.

Thus for an access request to be valid, in order for the mobile device to generate the access request, it must have been able to decrypt the access beacon code to find the time-varying code to include it in the access request. Thus the mobile device must have knowledge of the encryption algorithm (or associated decryption algorithm). In some embodiments, for added security the mobile device may then encrypt the time-varying identifier using another encryption algorithm so it is unintelligible to malicious devices that intercept the access request. In embodiments where the request is sent via an access server, it may include the static, or non-time-varying identifier of the access control device, so that intermediate devices, such as the access control server, are able to determine where to send the access request.

Advantageously, it may be possible to avoid replay access issues as the mobile device must use an identifier that changes with time in the access request.

The mobile device may have an application for generating access requests, wherein the application is configured to monitor for receipt of the access control beacon and to generate the access request.

The method may further comprise: making an access control decision based on the determined validity of the access request, preferably wherein making the access control decision is selected from the group comprising: not authorising access to the access point based on the access request; and allowing access to the access point based on the access request. Not authorising access may cause a control command to be executed or sent that causes the access point to be closed or locked, or to remain closed or locked. Authorising access may cause a control command to be executed or sent that causes the access point to be opened and/or unlocked.

Thus the method may further comprise: sending or executing a control command based on the access control decision.

The method may also comprise: receiving, at the mobile device, the access beacon comprising the access beacon code; and generating, at the mobile device, an access request based on the access beacon code.

The method may further comprise: decrypting, at the mobile device, the access beacon code to determine the identifier of the access control device or access point and the time-varying identifier. This is generally only possible when the beacon code has been developed by encryption, rather than by hashing.

There is also described: a computer-readable medium comprising instructions which, when executed by a computer, cause the computer to carry out the method substantially as described above.

There is also described: an access control device comprising: a memory; a communication interface; and a processor; wherein access control device is configured to perform the method substantially as described above.

There is also described: an access control system comprising: an access control device, configured to perform some or all of the steps of the method substantially as described above; and an access control server comprising: a memory; a communication interface; and a processor; wherein the access control server is configured to perform some or all of the steps of the method substantially as described above, preferably only those steps not performed by the access control device.

The system may further comprise a mobile device, preferably wherein the mobile device is configured to perform the steps performed at the mobile device in the method described above.

There is also described herein: a method of monitoring a premises having at least one access point, the method comprising receiving an access request from a mobile device, wherein the access request includes mobile device location data indicative of the location of the mobile device and data identifying an access point at the premises identifying one or more possible locations of the access point based on the mobile device location data in the access request and updating stored access point location data indicative of the location of the access point based on the identified one or more possible locations.

The mobile device location data is generally indicative of the present (current) location of the mobile device. For example, the location can be the location of the mobile device when it generates or transmits the access request. In other embodiments, it could be the location of the mobile device at the time an access beacon or advertisement for the access point is received at the mobile device, wherein the access request comprises an identifier from the access beacon or an identifier linked to the access beacon.

Where access requests are received via longer-range communications (e.g. via Wi-Fi, cellular and/or the Internet), a further step can be provided to check the mobile device is actually close to the access point. For example, a reader or other access control device positioned at the access point may transmit a short-range access beacon or advertisement, which can be used to form or generate the access request. When an access request is received that has been generated using information from the beacon, it may be assumed that the mobile device that generated the access request is within beaconing range of the access point. For example, the beacon may be a short-range beacon having a range of e.g. not more than 1m, preferably not more than 80cm, more preferably not more than 50cm. The beacon may be a Bluetooth beacon, e.g. an iBeacon. In other scenarios, access requests may have been received at or near the access point directly from the mobile device over a short-range wireless protocol, such as BLE or NFC, directly from a mobile access device (e.g. fob) to a reader at the access point. Thus a mobile device may be known to be present at, or at least very close to, the access point.

Where the access request is the first access request received for the access point, there may not be any location data stored for the access point and the step of updating stored access point location data may simply comprise storing access point location data.

Conventional access systems allow credentials to be read from mobile devices, such as keyfobs or smartcards. However by providing more advanced mobile devices with access control capabilities, it is possible to provide more functionalities and provide an improved access system.

Communications over short-range wireless interfaces can be slow, e.g. Bluetooth and RFID may take around 1-3 seconds to be transmitted, received and processed. This delay provides a poor user experience. By providing a mobile device that can send access requests over a different interface, e.g. using a communication protocol with higher bandwidth such as WiFi or cellular, it is possible to improve access time.

However, such communication routes may not always be available. One option is to attempt to send access requests via multiple communication channels at the same time, e.g. short-range communication such as Bluetooth as well as long-range via the Internet, such as cellular. However this uses up unnecessary bandwidth and power. Alternatively, attempts could be made to send access requests via different communication routes in order, e.g. sent consecutively. However this means if the first route fails, the user could experience considerable delay. By providing a determination as to whether communication is available by one route, and storing a flag indicative of this determination, it is possible to make a decision quickly as to which is the best communication route to use, saving time and resources.

When access requests can be transmitted to the access controller via a long-range communication method (as opposed to directly to the controller via short-range communication in the vicinity of the entry point), it is possible for malicious access requests to arrive at the access controller from devices that are not actually at the access point. Therefore security may be compromised. Accessing computer systems, such as logging onto a website, often takes into account multiple factors, such as the location or IP address from which the request originates. However in building or entry control, this has generally not been required due to the presupposed criteria that the requester is actually physically present at the premises. Therefore further levels of authentication can be helpful in reducing the security risk. In order to provide such authentication, it is helpful to use the location of the access points (or devices located close to the access points). One way of finding this location is to ask for it to be entered into the system by a user or operator on installation of the access control devices. However, this is time-consuming and prone to user errors. Thus by providing means for the system to learn about the location of access control devices or access points based on previous access requests, security can be improved.

Preferably the mobile device location data indicative of the location of the mobile device comprises one or more of geolocation data and data derived from a wireless local area network.

For example, the location data could be one or more of geolocation, e.g. GPS, data derived from local wireless networks, such as WLAN, e.g. Wi-Fi (IEEE 802.11), high-rate wireless PAN (IEEE 802.15.3), e.g. ultra-wideband, Zigbee etc. (IEEE 802.15.4). Wireless local area network data may a use received signal strength indication (RSSI) of one or more wireless signals at the mobile device and a comparison with the location of one of more wireless access points to identify the location.

Preferably the stored access point location data indicative of the location of the access point comprises a stored set of one or more possible locations for the access point, and wherein the method further comprises comparing the stored set of one or more possible locations with the identified one or more possible locations and wherein the step of updating stored access point location data is based on the comparison.

Where one or more of the identified possible locations are also present in the stored set of possible locations, the likelihood of the access point being in those locations may be higher. Each location in the stored set of possible locations may be assigned a probability likelihood. The step of updating stored access point location data may comprise changing the assigned probability likelihood of the possible location.

Preferably the premises has a plurality of access points and wherein the mobile device location data indicative of the location of the mobile device access point comprises step data indicative of the number of steps taken by a user of the mobile device between the time of a previous access request for one other access point at the premises and the time of the access request, wherein the previous access request was received from the mobile device; and wherein identifying one or more possible locations of the access point comprises using the step data to estimate the position of the access point relative to the other access point.

Step data may be derived at the mobile device based on movement detected by an integrated accelerometer of the mobile device and/or received from an accelerometer on a separate device that can be linked to the mobile device, such as a pedometer or smart watch, e.g. Fitbit etc.

The time of an access request may be the time the access request is generated at the mobile device. In other embodiments, it could be a time an access beacon for the access point is received at the mobile device.

Thus there may be a first access request for a first access point (i.e. the previous access request for the other access point, generally a previous access point), and a second access request for a second access point (the access request for the access point, also termed the present or current access point). The second access request may include step data indicative of steps taken by the user between generating the first access request and generating the second access request.

Preferably the method further comprises retrieving stored access point location data indicative of the location of the other access point and determining one or more possible locations for the access point based on the stored access point location data indicative of the location of the other access point and the position of the access point relative to the other access point.

For example, a predetermined distance covered per step may be used (e.g. a predetermined distance that is indicative of an average distance covered by one step; the average distance may be an average for the population in general, or an average associated with the mobile device or user thereof, e.g. based on historical data or based on the user's height) to estimate the distance covered by the user of the mobile device in the steps taken between the present access request and the access request (the present access request).

Then the possible locations of the access point (the present access point) can be assumed to be not more than the estimated distance from the previous access point, e.g. the possible locations of the access point are within a radius of the previous access point and the radius is equal to the estimated distance covered by the user in the steps.

The location of the previous access point may have been determined by looking up in a stored data set that stores the location of each access point. The location of the other access point may have been learned from previously reported access requests for that access point and then stored. Alternatively, the stored location data of the other access point may have been input, e.g. by a system administrator or installer, when the access point was installed or commissioned.

Updating stored access point location data may comprise updating one or more previously stored possible location for the access point, the previous locations preferably having been identified from one or more previous access requests.

The previous location(s) may have been found from previous access requests, such as from the location of mobile devices when generating previous access requests.

Preferably the premises has a plurality of access points, the method further comprises repeating the steps of any preceding claim for at least one access request for each of the plurality of access points and building a map of the locations or possible locations of each of the plurality of access points at the premises.

There is also described herein; a method of validating access requests in a premises having an access point, the method comprising: learning the location of the access point based on data contained in a first set of access requests for the access point subsequently receiving a subsequent access request for the access point from a mobile device, the subsequent access request including mobile device location data indicative of the location of the mobile device and data identifying the access point and validating the subsequent access request based on the learned location of the access point and the mobile device location data.

Preferably validating the subsequent access request comprises assigning an authenticity level to the access request.

In some embodiments, the step of learning the location of the access point comprises a method as described further above.

Preferably the first set of access requests comprises at least three access requests, preferably at least five access requests, more preferably at least ten access requests.

There is also described herein: a method of monitoring a premises, the method comprising receiving an access request from a mobile device, wherein the access request includes data identifying an access point at the premises determining the location of the access point and updating a stored location of the mobile device based on the determined location of the access point.

Thus it is possible to track the location of the mobile device, or a user associated with the mobile device, based on access requests made from the mobile device.

The location of the access point may be determined by looking up in a stored data set that stores the location of each access point. The location of each access point may have been learned from previously reported access requests for that access point and then stored. Alternatively, the stored location data of each access point may have been input, e.g. by a system administrator or installer, when the access point was installed or commissioned.

There is also described herein: a method of monitoring a premises, the method comprising providing a plurality of access control devices, storing the location of each of the plurality of access control devices, sending periodic advertisements from each of the plurality of access control devices over a short-range wireless protocol, each advertisement comprising data identifying the access point from which it is sent, receiving, at a mobile device, one or more advertisements, each advertisement from a different one the plurality of access control devices, determining the received signal strength at the mobile device of each of the received one or more advertisements, identifying one or more possible locations of the mobile device based on the received signal strength of each of the one or more advertisements and the stored location of the access control device corresponding to each advertisement and updating a stored location of the mobile device based on the identified one or more locations.

Thus it is possible to track the location of the mobile device, or a user associated with the mobile device, based on the signal strength of received access advertisements, or beacons.

The advertisement, or beacon, may be a short-range beacon having a range of e.g. not more than 1m, preferably not more than 80cm, more preferably not more than 50cm. The short-range wireless protocol may be for example Bluetooth, or Bluetooth^{®} Low Energy (BLE). The beacon or advertisement could, for example, be an iBeacon.

In some embodiments the access control devices are located at access points; in some embodiments only a subset of the access control devices are located at access points.

Preferably receiving, at a mobile device, one or more advertisements comprises receiving at least two advertisements from different access control devices.

If only one advertisement is used, it may only be possible to identify the location of the mobile device as being anywhere at a certain radius from the access control device from which the advertisement is transmitted. However, where there are advertisements from two different access control devices, the possible locations of the mobile device may be reduced, e.g. to points on a single circle (if the height or elevation of the mobile device is not known, e.g. in a multi-storey building), or to two points if the height or elevation is known.

Optionally the method further comprises determining whether the at least two advertisements are received at the mobile device within a predetermined threshold time of each other and using the at least two advertisements to update the stored location of the mobile device only if the at least two advertisements are received at the mobile device within the predetermined threshold time of each other.

Preferably the method further comprising the method for updating the stored location of the access point as described above, such that updating a stored location of the mobile device is based on the determined location of the access point identified in the access request and on the identified one or more possible locations of the mobile device based on the received signal strength of each of the one or more advertisements and the stored location of the access control device corresponding to each advertisement.

For example, in one embodiment, the access request used may be the most recent access request received from that mobile device. Then, this access request may identify a section of the premises which the mobile device has most recently been allowed access to (e.g. a different floor, or a different room or group of rooms). This can be used to determine which of the possible locations identified from the signal strength of advertisements are more likely to be indicative of the mobile device location.

In some embodiments, the mobile device has an application for generating access requests, and the application is configured to monitor for receipt of one or more access control beacons, or advertisements. The application can generate access requests based on information received in the access control beacon or advertisement.

The access request may be received from the mobile device via device-to-device communication. For example, a direct communication such as Bluetooth or NFC.

Alternatively, the access request can be sent from the mobile device to an access control server, the method further comprising: receiving, at the access control server, the access request from the mobile device; and transmitting, from the access control server, the access request to a plurality of access control devices or to a plurality of access control devices including the access control device. The access control server may forward the access request to the access control device on the basis of an identifier (or encrypted or hashed version thereof) that is included in the access request.

The access control beacon or advertisement and/or the access request may comprise an identifier (or encrypted or hashed version thereof) of the access control device or access point.

The method may further comprise: making an access control decision based on the access request, preferably wherein making the access control decision is selected from the group comprising: not authorising access to the access point based on the access request; and allowing access to the access point based on the access request.

There is also described a computer-readable medium comprising instructions which, when executed by a computer, cause the computer to carry out any of the methods substantially as described above.

There is also described herein an access control system comprising: at least one access control device or access control server comprising: a memory; a communication interface; and a processor; wherein the at least one access control device or access control server is configured to perform any of the methods substantially as described above.

There is also described herein: an access control system, comprising: at least one access control device comprising: a memory; a communication interface; and a processor; wherein the at least one access control device or access control server is configured to perform method steps as set out above; and an access control server comprising: a memory; a communication interface; and a processor; wherein the access control server is configured to receive access requests from the mobile device and send the received access requests to at least one of the at least one access control devices.

The access control system may further comprise one or more mobile devices for generating and transmitting access requests.

Any system feature as described herein may also be provided as a method feature, and vice versa. As used herein, means plus function features may be expressed alternatively in terms of their corresponding structure.

Any feature in one aspect of the invention may be applied to other aspects of the invention, in any appropriate combination. In particular, method aspects may be applied to system aspects, and vice versa. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

### BRIEF DESCRIPTION OF THE FIGURES

Methods and systems for access control are described by way of example only, in relation to the Figures, wherein:
Figure 1 illustrates s an access control system for a premises;
Figure 2 illustrates a system configured for implementing access control using a mobile device configured to generate access requests, in accordance with one or more implementations; and
Figures 3A, 3B, 3C, 3D, 3E, 3F, 3G, 3H, 3I, 3J, 3K, 3L, 3M and 3N illustrate methods for implementing access control and/or monitoring premises having access control systems using mobile devices configured to generate access requests, in accordance with one or more implementations.

### DETAILED DESCRIPTION

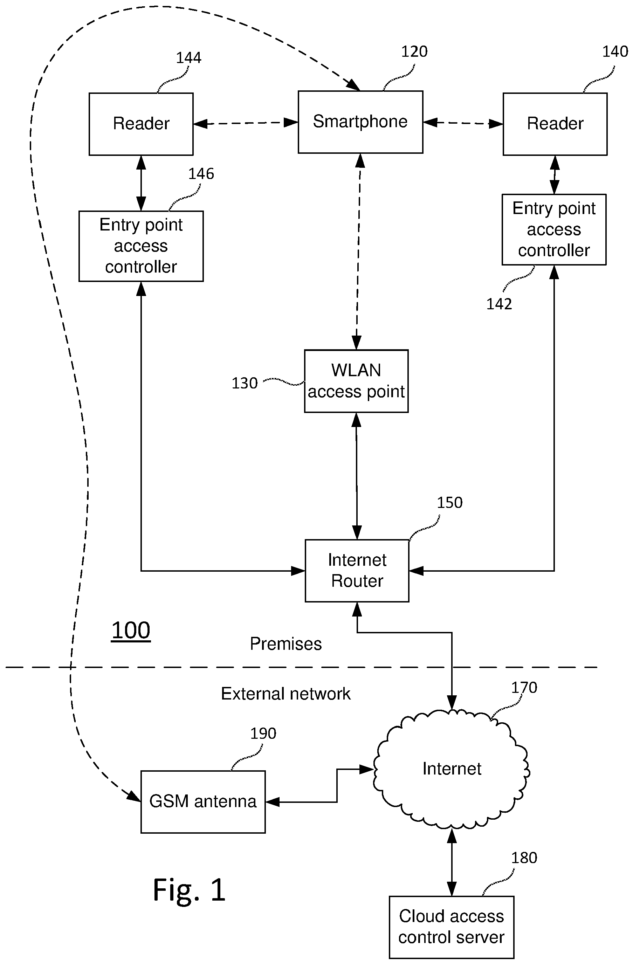

Figure 1 shows an access control system 100 that may be used for providing access to various entry points within a premises based on using a user's smartphone 120 as a credential. The system 100 comprises two readers 140, 144 which are positioned at fixed locations at the premises. Each reader 140, 144 is associated with an entry point (or access point), such as a door or gate. The readers 140, 144 are capable of transmitting short-range wireless communications. Such short-range wireless communications may have a range of greater than 30cm and less than 100m, for example around 50cm to 30m. In this example the readers 140, 144 are configured for Bluetooth^{®} and Bluetooth^{®} Low Energy (BLE) communication. Alternatively or additionally the readers can be capable of very short range communication, such as Near Field Communication (NFC), which may have a range of less than 10cm, for example between around 1cm and 5cm.

Each reader 140, 144 is connected to an entry point controller 142, 146. The controllers 142, 146 are each capable of controlling a door, a lock for a door or a gate. In this case the connection between each reader 140, 144 and controller 142, 146 is wired, specifically via an RS485 cable. However in other embodiments the connection may be wireless. Other controllers may also be provided which are capable of one or more other building automation or access control devices, such as lighting, heating or ventilation appliances etc. The controllers 142, 146 store control logic for making control/access decisions.

The system 100 also includes a wireless local area network (WLAN) access point 130, which is capable of transmitting and receiving short-range wireless communications. In this example the WLAN technology is Wi-Fi (IEEE 802.11), but others such as Zigbee (IEEE 802.15.4) could also be used.

The WLAN access point 130 is in communication with an Internet router 150 for providing a connection to the Internet 170. The connection between the WLAN access point 130 and the Internet router 150 is wired, e.g. using an RS485 cable. There are also wired connections between the entry point access controllers 142, 146 and the Internet router 150, in this example the wired connection is provided by Ethernet (IPv4/IPv6) cables. The smartphone 120 is also able to connect to the WLAN access point 130 via the wireless WLAN communication protocol.

The Internet 170 provides a connection to a cloud-based access control server 180, which also stores logic for controlling the system. A GSM antenna 190 is also shown, providing connectivity to the Internet 170. The smartphone 120 is able to communicate with the GSM antenna 190 via cellular communications. This connection also provides Internet access for the smartphone. Although only a single GSM antenna 190 is shown here, in reality there will be a plurality of GSM or other cellular technology antennas for cellular communication.

In alternative embodiments, other mobile devices may be used instead of smartphone 120, such as tablets or laptop computers, or less intelligent devices, such as keyfobs.

In some embodiments the controllers 142, 146 may be integrated into the readers 140, 144 to provide wireless communication and control capability in a single device.

Although in the example of Figure 1 the Internet connection for the controllers 142, 146 is provided by wired connections to the Internet router 150, in alternative embodiments the access controllers 142, 146 may have WLAN capabilities, such that they can be connected to the Internet router 150 wirelessly via the WLAN access point 130.

In order for a user to access one of the entry/access points the system must know which entry point the user requires access to and must then verify that the user is permitted to use that access point. An access request is therefore sent from the user's smartphone 120 to the controller 142, 146. In this system there are two routes by which the access request can be transmitted from the smartphone 120 to the controller 142, 146. The first route is for the access request to pass from the smartphone 120 directly to one of the readers 140, 144 via a short-range wireless communication, or a device-to-device communication path (also referred to as a single hop radio communication). In this embodiment the short-range direct communication used to transmit the access request is Bluetooth^{®} or Bluetooth^{®} Low Energy (BLE). The access request is then transferred to the corresponding access controller 140, 144 via the wired connection.

The second route is for the access request to pass from the smartphone 120 to one of the controllers 144, 146 via the Internet 170. In this route, the Internet connection for the smartphone may be provided by the GSM antenna 190 as part of the cellular communications network, or may be provided by the WLAN access point 130 and Internet router 150 at the premises. The access request is sent to the cloud access control server 180 via the Internet 170. The cloud access control server 180 can then send the access request to the relevant entry point access controller 144, 146, also via the Internet 170. The Internet connection for the entry point access controllers 144, 146 is provided by the wired connection to the Internet router 150. The cloud access control server 180 may direct the access request to the required controller 144, 146, e.g. if the access request contains information identifying the access controller 144, 146. Alternatively, the access server 180 may not be able to identify which controller 144, 146 the request relates to, so may send the access request to a plurality of controllers 144, 146. Each controller may then be able to determine whether the access request is for that controller based on information or identifiers included in the access request.

The access system requires some kind of user authentication to prevent unauthorised persons gaining access at the entry points. Therefore each access request may include an identifier of the smartphone 120 or of the user of the smartphone, or an encrypted or hashed version thereof, from which it may be possible to identify the user and/or smartphone and determine whether access should be provided. The access request could alternatively include some form of secret code that can only be generated at authorised requestors, e.g. based on an identifier received from the reader. The controller 144, 146 includes logic for making access control decisions based on received access requests.

It is also important to check the access request originates from a device close to the entry point and/or reader 140, 144 for security reasons and to prevent access to multiple entry points at the premises being based on a single access request. Therefore the smartphone 120 generally has to obtain an identifier of the reader 140, 144 and/or of the entry point access controller 142, 146, or an encrypted or hashed version thereof, prior to generating the access request. The received identifier, or encrypted or hashed version thereof, can then be included in the access request by the smartphone 120. Alternatively, the received identifier, or encrypted or hashed version, can be processed by the smartphone 120 to generate another code from which the access point can be identified.

The smartphone 120 can obtain said identification or code of the entry/ access point or reader by receiving it in a communication from the reader 140, 144, generally a wireless communication. For example the readers 140, 144 can emit access beacons, such as in the form of Bluetooth or BLE beacons, containing the identifier or an encrypted or hashed version of the identifier. The readers 140, 144 can emit beacons periodically, or may be "woken up" and caused to emit beacons by some form of user interaction. For example the readers 140, 144 may have a user interface element, such as a button or touchscreen, or may have a motion detector, such as a passive infrared (PIR) sensor, or touch switch, such as a capacitance switch or resistance touch switch. The user interaction on such a user interface element can trigger the reader 140, 144 to start emitting beacons.

In alternative embodiments, the control logic could be stored on the server 180 and the server 180 could make access control decisions in addition or instead of the access decisions being made at each controller 142, 146.

In alternative embodiments, the smartphone 120 could transmit a query communication to the reader, asking the reader for the identifier of the entry point or controller. The query message may be sent over a short-range communication, e.g. Bluetooth or BLE or NFC. Upon receipt of the query message the reader can send a beacon or other communication to the smartphone 120 with the identifier or encrypted or hashed version thereof. This scenario generally requires some sort of user interaction on the smartphone 120 to trigger the query message.

An access control application is provided on the smartphone 120 for generating entry access requests and sending access requests to the controller. The application may need to be in an active state to generate and send access requests.

There can be several different states for the access control application. In some examples, there are five states for the application:
Non-running: the app is not running at all.

Inactive foreground: the app is running in the foreground, but not receiving events. This may happen, for example, when a call or SMS message is received.

Active foreground: the app is running in the foreground, and receiving events. The app generally takes up

Background running: The app is running in the background, and executing code.

Suspended: The app is in the background, but no code is being executed.

However in some embodiments only some of these are available, for example only the active foreground and non-running (and optionally the background running) states.

In a foreground state, or mode, the application may occupy some or all of the screen of the mobile device, so that the interface of the app is visible to the user. In background, non-running and suspended states, or modes, the application may not be visible on the screen of the mobile device, or the application interface (or a portion of the interface) may be visible behind or alongside one or more other applications that are occupying the majority of the screen of the mobile device. For example, in the background state the application may occupy 25% or less, or 50% or less of the screen area. In the background running state, the application runs on the mobile device and can receive beacon data and process commands, however the user is not actively interacting with the application and the application may not be displayed on the mobile device. This background state may be referred to as the application running in the background.

In some embodiments, the application may have additional background states such as a suspended state and/or a terminated state. In the suspended or terminated state the application may not actually be running on the device in the background, for example the application may not be able to run code on the processor of the mobile device or actuate commands. In some cases, the application may not be able to receive beacon notifications or process commands in the suspended and/or terminated state.

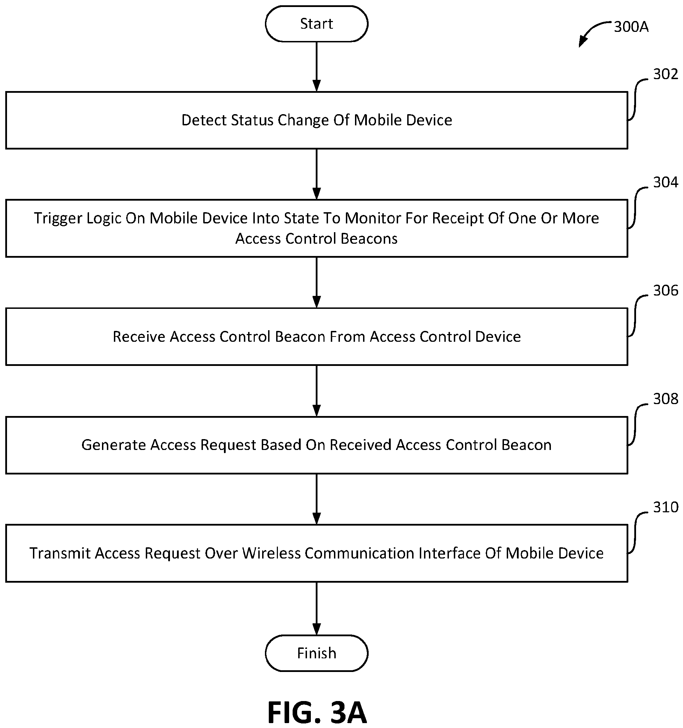

FIG. 3A to 3N illustrate methods for implementing access control and monitoring premises using a mobile device configured to generate access requests, in accordance with one or more implementations. The operations of the methods presented below are intended to be illustrative. In some implementations, the methods may be accomplished with one or more additional operations not described, and/or without one or more of the operations discussed. Additionally, the order in which the operations of the methods are illustrated and described below is not intended to be limiting.

In some implementations, the methods may be implemented in one or more processing devices (e.g., a digital processor, an analog processor, a digital circuit designed to process information, an analog circuit designed to process information, a state machine, and/or other mechanisms for electronically processing information). The one or more processing devices may include one or more devices executing some or all of the operations of method in response to instructions stored electronically on an electronic storage medium. The one or more processing devices may include one or more devices configured through hardware, firmware, and/or software to be specifically designed for execution of one or more of the operations of method.

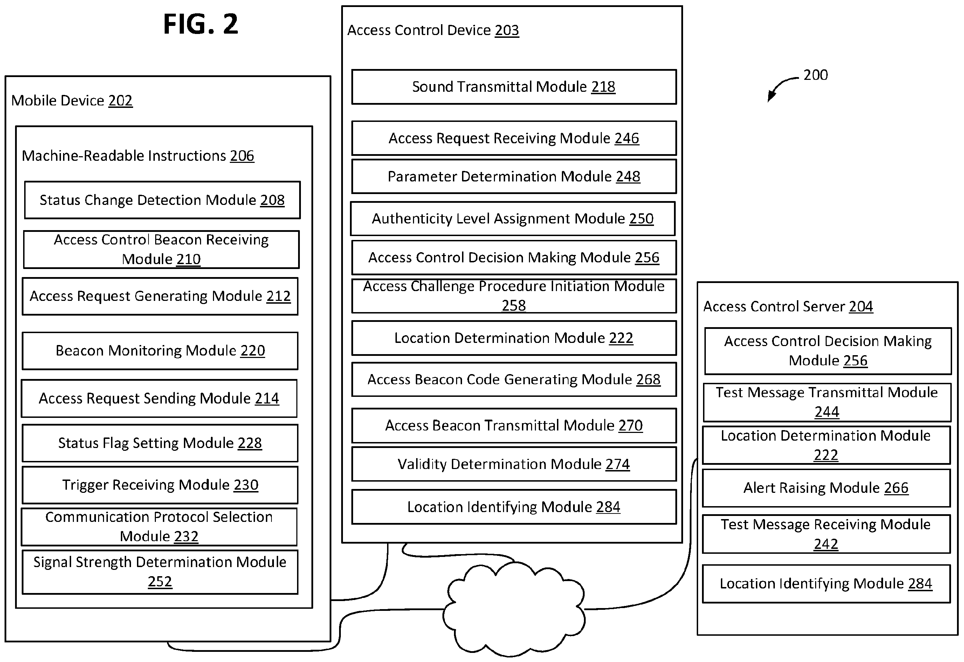

Referring to FIG. 2, a system 200 configured for implementing access control using a mobile device configured to generate access requests will now be described. In some implementations, system 200 may include one or more computing platforms 202, also referred to herein as mobile device 202. Computing platform(s) 202 may be configured to communicate with one or more remote platforms 204 according to a client/server architecture, a peer-to-peer architecture, and/or other architectures. Remote platform(s) 204 may be configured to communicate with other remote platforms via computing platform(s) 202 and/or according to a client/server architecture, a peer-to-peer architecture, and/or other architectures. Users may access system 200 via remote platform(s) 204. Remote platform 204 may be an access control server 204. There are also one or more access control devices 203, each located at or adjacent or near an access point.

Mobile device 202 may be configured by machine-readable instructions 206. Machine-readable instructions 206 may include one or more instruction modules. The instruction modules may include computer program modules. The instruction modules may include one or more of status change detection module 208, access control beacon receiving module 210, access request generating module 212, access request sending module 214, status flag setting module 228, trigger receiving module 230, communication protocol selection module 232, signal strength determination module 252 and/or other instruction modules.

The access control devices 203 may also be configured by machine-readable instructions. The access control devices 203 may include one or more of a sound transmittal module 218, access request receiving module 246, parameter determination module 248, authenticity level assignment module 250, access control decision making module 256, access challenge procedure initiation module 258, access beacon code generating module 268, access beacon transmittal module 270, validity determination module 274, location identifying module 284, and/or other instruction modules.

The access control server 204 may also be configured by machine-readable instructions. The access control server 204 may include one or more of location determination module 222, test message receiving module 242, test message transmittal module 244, alert raising module 266, location identifying module 284, and/or other instruction modules. The access control server 204 may be capable of making access control decisions in some embodiments, and so may include a decision making module 256.

The mobile device may be a mobile telephone, or smartphone, or may be a tablet or personal computer. Generally the mobile device will have wireless communication capability, such as short-range communication protocol (e.g. Bluetooth) and preferably longer-range communication capability (e.g. cellular or WLAN).

Status change detection module 208 may be configured to detect a status change of the mobile device. Status changes may comprise detecting a location of a mobile device has changed (or changed by more than a predetermined amount) and/or detecting a predetermined sound. Status change detection module 208 may be configured to, upon detecting a status change of the mobile device, trigger logic on the mobile device into a state to monitor for receipt of one or more access control beacons. Triggering logic may comprise activating logic. Triggering logic to monitor for receipt of beacons may comprise switching on a short-range wireless communication interface.

Beacons may be wireless messages or adverts, generally broadcast messages. Preferably beacons are transmitted over short-range wireless communication protocols, e.g. Bluetooth.

Access control beacon receiving module 210 may be configured to receive an access control beacon from an access control device. An access control device may be a local device configured to control an access point, such as a door or gate controller. Additionally or alternatively, the access control device may have reader capabilities, e.g. be a card or credential reader. The access control device may have a user interface. The access control device may have a presence detector, such as a motion detector.

Access control beacon receiving module 210 may be configured to receive an access control beacon from an access control device. The access control beacon may include an identifier of the access control device. Such an identifier may be a unique identifier of the access control device. The identifier may be unique worldwide, or unique within a particular access control system. Generating a single access beacon code may be repeated with a different time-varying identifier in response to receiving a user interaction at the access control device. The time-varying identifier may change over time, for example it may change at a predetermined frequency (such as every few seconds or every minute or every five minutes), or it may change dependent on access requests received for the access control device (such as every time an access request for the access control device or corresponding access point is received). A user interaction could be a user input, such as selection of an option (e.g. via a button or screen of a user interface). Alternatively, it could be a user input such as a sound, e.g. a voice-activated input detected on a microphone.

Access request generating module 212 may be configured to generate an access request based on the received access control beacon. An access request may comprise a request to be allowed access via the corresponding access point. It may also comprise an identifier of the mobile device and/or the user of the mobile device. The access request may have been generated using information included in the access control beacon (such as the access control device identifier).

Access request generating module 212 may be configured to generate an access request based on the received access control beacon.

Access request transmittal module 214 may be configured to transmit, or send, the access request over a wireless communication interface of the mobile device. The wireless communication interface may be a short-range (e.g. where the range is <100m or <50m or <20m), or device-to-device, or low bandwidth interface, such as Bluetooth or BLE or UWB.

Upon determining that the mobile device is not stationary, logic on the mobile device may transition into a state to monitor for receipt of one or more access control beacons.

The mobile device may be configured to periodically determine whether the mobile device is able to communicate over the first wireless communication protocol.

Sound transmittal module 218 may be configured to transmit a predefined sound from a device located at or near an access point, e.g. from the access control device. The device located at or near an access point may be triggered to transmit the predefined sound upon detecting a user interaction, e.g. by motion detection by a motion detector. Matching the received sound data to a predetermined sound signature may include identifying the sound data as indicative of the transmitted predefined sound. The received sound data may be outside the audible range, e.g. ultrasonic. The predetermined sound signature may be stored sound data.

The mobile device may periodically monitor for receipt of one or more access control beacons at predetermined monitoring intervals. The mobile device may monitor only during monitoring periods, which can be separated by monitoring intervals (during which the mobile device does not monitor). The monitoring time period may be substantially smaller than the predetermined monitoring intervals. The predetermined monitoring intervals may be at least 5 seconds in length and not more than 30 minutes in length preferable at least 20 seconds and/or not more than 20 minutes.

Location determination module 222 may be configured to determine the location of the mobile device. This may be based on GPS or wireless communication data, such as WLAN data. Location identifying module 284 may be configured to determine the location of the access point.

The monitoring intervals may be adjusted based on the determined location of the mobile device. Adjusting the monitoring intervals based on the determined location may include setting the monitoring intervals to different predetermined values for each side of a geofence located at or near a premises.

An access control application (or software) on the mobile device may be caused to transition from an inactive to an active state.

Status flag setting module 228 may be configured to, based on determining which wireless communication routes are available, set at least one status flag. A trigger for an access request may be received at the mobile device. Upon receiving the trigger, the mobile device may generate an access request. Communication protocol selection module 232 may be configured to select a communication protocol from the first and second wireless communication protocols based on the previously set status flag.

Access request sending module 214 may be configured to send the access request to an access control device using the selected wireless communication protocol. Access request sending module 214 may be configured to send the access request from the access control server to an identified access control device. The access control device may be identified from the access control beacon or advert.

The mobile device may be configured to, if an acknowledgement of a test message is not received at the mobile device within a predetermined test time period, wait a predetermined test interval period before attempting to send a further test message from the mobile device using the first wireless communication protocol. The acknowledgement message may be sent by a remote access control server. The test time period is preferably less than 5 minutes, more preferably less than 3 minutes, more preferably less than 1 minute. The test time period may be between 1 second and 30 seconds, preferably between 1 second and 15 seconds, more preferably between 1 second and 5 seconds or between 1 second and 3 seconds.

Upon the status flag being reset or expiring, the mobile device may an attempt to send a further test message. The flag may be reset (e.g. removed or deleted) after a predetermined time period.

The mobile device may be configured to repeat the steps of attempting to send a first test message and monitoring for receipt of an acknowledgement of the first test message at time intervals of a first test interval length. Thus sending consecutive first test messages may be separated by a time equal to the first test interval length. The remote server may be configured to repeat the step of transmitting a second test message from the remote server to the mobile device for a predetermined time period (e.g. 30 minutes or 1 hour, preferably at least 20 minutes, more preferably between 15 minutes and 12 hours) or a predetermined number of times (e.g. at least 3 or at least 5 times).

The access control device may repeat the steps of generating a single access beacon code from the identifier of the access control device or access point and a time-varying identifier using a hashing or encryption algorithm and transmitting, from the access control device, an access beacon including the access beacon code.

Test message receiving module 242 may be configured to receive the first test message from the mobile device at a remote server. Test message receiving module 242 may be configured to, upon receiving the first test message, transmit an acknowledgement of the first test message from the remote server to the mobile device. Setting at least one status flag at the mobile device may include setting the at least one status flag upon receiving the acknowledgement of the first test message. Setting at least one status flag may include updating the at least one status flag upon receiving the acknowledgement of each of the one or more second test messages.

Test message transmittal module 244 may be configured to transmit a second test message from the remote server to the mobile device.

Access request receiving module 246 may be configured to receive an access request from the mobile device. The access request may include an identifier indicative of an access point to be accessed, e.g. including a (unique) identifier of the access point or an associated access control device. Access request receiving module 246 may be configured to receive, at the access control device, an access request from the mobile device.

Access request receiving module 246 may alternatively be configured to receive, at the access control server, the access request from the mobile device. Access request receiving module 246 may be configured to receive an access request from a mobile device. The access request may include mobile device location data indicative of the location of the mobile device and data identifying an access point at the premises. Access request receiving module 246 may be configured to subsequently receive a subsequent access request for the access point from a mobile device. The subsequent access request is thus received after a first, or initial (or prior), access request. The subsequent access request may include mobile device location data indicative of the location of the mobile device and data identifying the access point. The mobile device location data indicative of the location of the mobile device may include one or more of geolocation data and data derived from a wireless local area network. The premises may have a plurality of access points. The mobile device location data indicative of the location of the mobile device may include step data indicative of the number of steps taken by a user of the mobile device between the time of a previous access request for one other access point at the premises and the time of the access request. Access request receiving module 246 may be configured to receive an access request from a mobile device.

Detecting a status change of the mobile device may include determining that the mobile device is not stationary. Detecting a status change of the mobile device may include detecting the mobile device has crossed a geofence. Detecting a status change of the mobile device may include receiving sound data from a microphone of the mobile device. Detecting a status change of the mobile device may include matching the received sound data to a predetermined sound signature. Detecting a status change of the mobile device may include determining that the sound data matches a predetermined sound signature. Determining the location may include determining the mobile device has crossed a geofence. Monitoring for receipt of one or more access control beacons and/or generating the access request may be performed by an application on the mobile devuce. Generating an access request may be based on an identifier of the mobile device or of the user of the mobile device. Attempting to send a test message from the mobile device may be triggered by the mobile device detecting it is located at or within a predetermined distance of a premises for which access can be controlled based on access requests generated by the mobile device. The access request and the previous access request each may include location data indicative of the location of the mobile device. The predetermined distance may be at least 10m and/or not more than 5km or not more than 1km.

Initiating a challenge procedure may include sending a request for further information to the mobile device. Determining whether the access request may include the access beacon code or the time-varying identifier includes determining whether the access request includes one of the stored access beacon codes or the time-varying identifiers (where they are stored in the access control device and/or at the access control server). Determining the validity of the access request may be based on the determination of whether the access request includes one of the stored access beacon codes or time-varying identifiers. If a request is determined invalid or not valid, it may be refused, or not allowed. Thus no access control action may be taken in response. An alert may also be triggered. Determining the validity of the access request may be based on the code generation (e.g. time at which code is generated in the access control device) or transmission time (e.g. time at which access beacon is transmitted from the access control device) associated with the access code. Determining whether the access request includes the access beacon code or the time-varying identifier may include determining whether the access request includes the access beacon code. The access request may be received from the mobile device via device-to-device communication. Device-to-device communication may be direct communication between devices, e.g. not via any other communication devices. Examples include Bluetooth or UWB, rather than communication over the Internet or over a WLAN network, which may require multiple hops via multiple devices before reaching the destination.

The access request may be sent from the mobile device to an access control server. The access request may include the access beacon code. Identifying, at the access control server, one of the access control devices to which to send the access request may be performed by matching the access beacon code in the access request to the identifier of the access control device. In some embodiments the access request may be only determined as valid if the access request includes the time-varying identifier or an encrypted version thereof. The previous, or prior, access request may have been received from the (same) mobile device. Validating the subsequent access request may include assigning an authenticity level to the access request. The authenticity level may provide a probability of how likely it is the access request originated from a legitimate, authorised user or from a malicious attack.

The access request may include data identifying an access point at the premises. The access request may include location data indicative of the location of the mobile device and determining the at least one parameter may include determining the location of the access point. Comparing the location of the mobile device with the location of the access point may include determining the distance between the access point and the mobile device. Assigning an authenticity level to the access request may include comparing the distance between the access point and the mobile device to one or more threshold distances. Threshold distances may be, for example, between around 50cm and 5m, more preferably between around 50cm and 2m. Assigning an authenticity level to the access request may include selecting an authenticity level from a plurality of authenticity levels based on the comparison with the one or more threshold distances. The location data indicative of the location of the mobile device may include one or more of geolocation data and data derived from a wireless local area network.

Determining at least one parameter associated with the mobile device and/or the access point may include receiving data indicative of a previous access request generated by the mobile device. Determining at least one parameter associated with the mobile device and/or the access point may include assigning an authenticity level to the access request based on the identification of the access point to be accessed and the previous access point. The previous access point may be the access point the mobile device most recently transmitted an access request for. Determining at least one parameter associated with the mobile device and/or the access point may include receiving step data indicative of the number of steps taken by a user holding the mobile device between the time of the previous access request and the time of the access request. Assigning an authenticity level to the access request may be based on the received step data and a determination of the distance between the access point of the previous request and the access point to be accessed. Identifying one or more possible locations of the access point may include using the step data to estimate the position of the access point relative to the other access point. Updating stored access point location data may include updating one or more previously stored possible location for the access point.

Updating a stored location of the mobile device may be based on the determined location of the access point identified in the access request and on the identified one or more possible locations of the mobile device based on the received signal strength of each of one or more advertisements and the stored location of the access control device corresponding to each advertisement. The received signal strength may be received signal strength at the mobile device.

Parameter determination module 248 may be configured to determine at least one parameter associated with the mobile device and/or the access point. Authenticity level assignment module 250 may be configured to assign an authenticity level to the access request based on the access point to be accessed and the at least one parameter. Authenticity level assignment module 250 may be configured to assign an authenticity level to the access request based on the comparison of the location. Assigning the authenticity level to the access request may be based on location data indicative of the location of the mobile device at the time of the previous access request and the time of the (subsequent) access request and/or the distance moved by the mobile device between the time of the previous access request and the time of the access request.

The access control device and/or access control server may be configured to compare the location of the mobile device with the location of the access point. The access control device and/or the access control server may be configured to determine the distance between the access point to be accessed and the access point of the previous access request.

Access control decision making module 256 may be configured to make an access control decision based on the authenticity level assigned to the access request. The decision may comprise allowing access and thus activating commands or controls to allow access. The decision may comprise not allowing access, and thus comprise activating commands or controls to prevent access, or not simply activating commands or controls that would allow access.

Access challenge procedure initiation module 258 may be configured to initiate an access challenge procedure based on the assigned authenticity level, e.g to request further information or credentials before making an access decision.

Received further information may be checked against a set of stored access credential information. Stored access credential information may include passwords, PINs, user IDs, or other information such as bio identifiers (e.g. images of faces or iris or fingerprints) for authorised users. The set of stored access credential information may be selected from a plurality of sets of stored access credential information based on an identifier in the access request.

Authenticity level assignment module 250 may be configured to update the authenticity level for the access request based on whether the received information matches the set of stored access credential information.

Alert raising module 266 may be configured to raise an alert based on the authenticity level.

Access beacon code generating module 268 may be configured to generate, at an access control device associated with an access point, a single access beacon code from an identifier of the access control device or access point and a time-varying identifier using a hashing or encryption algorithm. The hashing or encryption algorithm may be an irreversible hashing algorithm. The hashing or encryption algorithm may be a reversible encryption algorithm. Reversible encryption algorithms can be decrypted to return to the inputs of the encryption algorithm. Making the access control decision may be selected from the group including not authorising access to the access point based on the access request. Making the access control decision may be selected from the group including allowing access to the access point based on the access request.

Access beacon transmittal module 270 may be configured to transmit, from the access control device, an access beacon including the access beacon code. Preferably the beacon, or advertisement, is sent over a short-range wireless communication interface or protocol.

Validity determination module 274 may be configured to determine whether the access request includes the access beacon code or the time-varying identifier. Validity determination module 274 may be configured to determine the validity of the access request based on the determination of whether the access request includes the access beacon code or the time-varying identifier.

The access control device and/or the access control server may store each of the generated access beacon codes or each of the time-varying identifiers along with the associated code generation or transmission time for each code.

The access control server may be configured to identify one of the access control devices to which to send the access request based on an access beacon code in an access request received at the server.

The access control device may be configured to send, from the access control device to the access control server, the generated access beacon code and an identifier of the access control device. Generating an access request may be based on the identifier of the access control device.

The access control server may be configured to store a link or mapping between the access beacon code and the identifier of the access control device.

Location identifying module 284 may be configured to identify one or more possible locations of the access point based on the mobile device location data in the access request.

Location determination module 222 may be configured to identify one or more possible locations of the mobile device based on the received signal strength of each of the one or more advertisements and the stored location of the access control device corresponding to each advertisement. Location identifying module 284 may be configured to update stored access point location data indicative of the location of the access point based on the identified one or more possible locations. The access control server may be configured to build a map of the locations or possible locations of each of the plurality of access points at the premises.

The access control server (or each individual access point) may be configured to learn the location of the access point based on data contained in a first set of access requests for the access point. By way of non-limiting example, the first set of access requests may include at least three access requests, preferably at least five access requests, more preferably at least ten access requests.

Validity determination module 274 may be configured to validate the subsequent access request based on the previously learned location of the access point and the mobile device location data.

Location determination module 222 may be configured to update a stored location of the mobile device based on the determined location of the access point. Location identifying module 284 may be configured to update a stored location of the mobile device based on the identified one or more locations.

An access control system may comprise a plurality of access control devices. Location identifying module 284 may be configured to store the location of each of the plurality of access control devices.

Access beacon transmittal module may be configured to send periodic advertisements from each of the plurality of access control devices over a short-range wireless protocol. Each advertisement may include data identifying the access point from which it is sent.

Access control beacon receiving module 210 may be configured to receive, at a mobile device, one or more advertisements. By way of non-limiting example, determining that the mobile device may be not stationary includes receiving motion data from an accelerometer, gyroscope, magnetometer or barometer of the mobile device. Determining that the mobile device may be not stationary includes determining that the received motion data is indicative of movement. Determining that the mobile device may be not stationary includes receiving location data of the mobile device. Determining that the mobile device may be not stationary includes determining from the received location data that the mobile device is moving.

The mobile device may have an application for generating access requests. The mobile device may have an operating system. Detecting a status change of the mobile device may be performed by the operating system. Determining whether the mobile device may be able to communicate over the first wireless communication protocol includes determining whether the mobile device is able to communicate over an IP-based network link. Periodically determining whether the mobile device may be able to communicate over the first wireless communication protocol can include attempting to send a test message from the mobile device using the first wireless communication protocol.

Periodically determining whether the mobile device may be able to communicate over the first wireless communication protocol can includes monitoring for receipt of an acknowledgement of the test message at the mobile device. Periodically determining whether the mobile device may be able to communicate over the first wireless communication protocol includes monitoring for receipt of a test message from an access control server (e.g. a remote or cloud-based) at the mobile device. Periodically determining whether the mobile device may be able to communicate over the first wireless communication protocol includes attempting to send a first test message from the mobile device using the first wireless communication protocol. Periodically determining whether the mobile device may be able to communicate over the first wireless communication protocol can include monitoring for receipt of an acknowledgement of the first test message received over the first wireless communication protocol at the mobile device. Periodically determining whether the mobile device may be able to communicate over the first wireless communication protocol includes, upon receiving an acknowledgement of the first test message, monitoring for receipt of one or more second test messages received over the first wireless communication protocol at the mobile device. Determining whether the mobile device may be able to communicate over the first wireless communication protocol may include attempting to send a test message from the mobile device using the first wireless communication protocol.

The at least one parameter associated with the mobile device and/or the access point may include a historical measure based on a plurality of previous access requests generated by the mobile device or on behalf of a user associated with the mobile device. The access request from the mobile device may include the identifier of the access control device. Each may advertisement from a different one the plurality of access control devices. The historical measure may refer to requests generated or sent or received over a previous or preceding time period.

The mobile device may be configured to determine the received signal strength at the mobile device of each of the received one or more advertisements or access control beacons.

It may be determined whether at least two advertisements are received at the mobile device within a predetermined threshold time of each other before using them to determine or update a location of the mobile device. At least two advertisements to update the stored location of the mobile device only if the at least two advertisements are received at the mobile device within the predetermined threshold time of each other.

In some implementations, monitoring for receipt may include monitoring for receipt for a monitoring time period. In some implementations, the application may have at least one active state and at least one inactive state. In some implementations, the access control beacons may be wireless beacons, for example short range wireless beacons such as Bluetooth, Bluetooth low energy, or iBeacons. In some implementations, the status flag may denote the availability of communication over the first wireless communication protocol. In some implementations, selecting a communication protocol may include selecting the first wireless communication protocol if the status flag denotes the first wireless communication protocol is available, regardless of whether or not the second wireless communication protocol is available.

In some implementations, the first wireless communication protocol may be a high bandwidth wireless communication protocol and the second wireless communication protocol is a low bandwidth wireless communication protocol. In some implementations, the first wireless communication protocol may provide an internet protocol-based network link and the second wireless communication protocol provides a short-range data link. In some implementations, by way of non-limiting example, the first wireless communication protocol may be selected from cellular and Wi-Fi and the second wireless communication protocol is selected from Bluetooth, BLE or NFC. In some implementations, the status flag may be reset or expire after a predetermined time period. In some implementations, receiving a trigger for an access request may include receiving an access control beacon from an access control device over the second wireless communication protocol. In some implementations, the access point to be accessed may be one of a plurality of access points at a premises.

In some implementations, the previous access request may relate to one of the plurality of access points. In some implementations, assigning an authenticity level to the second access request may be based on the determined distance. In some implementations, generating a single access beacon code may be repeated with a different time-varying identifier at predetermined generation intervals. In some implementations, generating a single access beacon code may be repeated with a different time-varying identifier in response to receiving and access request or determining an access request is valid. In some implementations, updating stored access point location data may be based on the comparison. In some implementations, the previous locations preferably may have been identified or inferred from one or more previous access requests.

In some implementations, the premises may have a plurality of access points. In some implementations, receiving, at a mobile device, one or more advertisements may include receiving at least two advertisements from different access control devices. Preferably the different access control devices are located in different locations. The different access control devices may have different (unique) identifiers.

In some implementations, computing platform(s) 202, 203 and remote platform(s) 204 may be operatively linked via one or more electronic communication links. For example, such electronic communication links may be established, at least in part, via a network such as the Internet and/or other networks. It will be appreciated that this is not intended to be limiting, and that the scope of this disclosure includes implementations in which computing platform(s) 202, 203, 204, may be operatively linked via some other communication media.

A given remote platform 204 may include one or more processors configured to execute computer program modules. The computer program modules may be configured to enable an expert or user associated with the given remote platform 204 to interface with system 200, and/or provide other functionality attributed herein to remote platform(s) 204. By way of non-limiting example, a given remote platform 204 and/or a given computing platform 202 may include one or more of a server, a desktop computer, a laptop computer, a handheld computer, a tablet computing platform, a NetBook, a Smartphone, a gaming console, and/or other computing platforms.

Computing platform(s) 202, 203, 204 may include electronic storage, one or more processors, and/or other components. Computing platform(s) 202, 203, 204 may include communication lines, or ports to enable the exchange of information with a network and/or other computing platforms. Illustration of computing platform(s) 202, 203, 204 in FIG. 2 is not intended to be limiting. Computing platform(s) 202, 203, 204 may include a plurality of hardware, software, and/or firmware components operating together to provide the functionality attributed herein to computing platform(s) 202, 203, 204. For example, computing platform(s) 202, 203, 204 may be implemented by a cloud of computing platforms operating together as computing platform(s) 202, 203, 204.

Electronic storage on devices 202, 203, 204 may comprise non-transitory storage media that electronically stores information. The electronic storage media of electronic storage 316 may include one or both of system storage that is provided integrally (i.e., substantially non-removable) with computing platform(s) 202, 203, 204 and/or removable storage that is removably connectable to computing platform(s) 202, 203, 204 via, for example, a port (e.g., a USB port, a firewire port, etc.) or a drive (e.g., a disk drive, etc.). Electronic storage may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage may include one or more virtual storage resources (e.g., cloud storage, a virtual private network, and/or other virtual storage resources). Electronic storage may store software algorithms, information determined by processor(s), information received from computing platform(s) 202, 203, 204, and/or other information that enables computing platform(s) 202 to function as described herein.

Processor(s) may be configured to provide information processing capabilities in computing platform(s) 202, 203, 204. As such, processor(s) may include one or more of a digital processor, an analog processor, a digital circuit designed to process information, an analog circuit designed to process information, a state machine, and/or other mechanisms for electronically processing information. These processing units may be physically located within the same device, or processor(s) may represent processing functionality of a plurality of devices operating in coordination. Processor(s) may be configured to execute the modules shown, and/or other modules. Processor(s) may be configured to execute the modules by software; hardware; firmware; some combination of software, hardware, and/or firmware; and/or other mechanisms for configuring processing capabilities on processor(s). As used herein, the term "module" may refer to any component or set of components that perform the functionality attributed to the module. This may include one or more physical processors during execution of processor readable instructions, the processor readable instructions, circuitry, hardware, storage media, or any other components.

It should be appreciated that although the modules are illustrated in FIG. 2 as being implemented within three distinct processing units, in implementations in which processor(s) include multiple processing units, one or more of the modules may be implemented remotely from the other modules. The description of the functionality provided by the different modules is for illustrative purposes, and is not intended to be limiting, as any of modules may provide more or less functionality than is described. For example, one or more of the modules may be eliminated, and some or all of its functionality may be provided by other ones of modules. As another example, processor(s) may be configured to execute one or more additional modules that may perform some or all of the functionality attributed below to one of the modules illustrated in Figure 2.

FIGs. 3A to 3N illustrate methods for implementing access control and monitoring premises using a mobile device configured to generate access requests, in accordance with one or more implementations. The operations of the methods presented below are intended to be illustrative. In some implementations, methods may be accomplished with one or more additional operations not described, and/or without one or more of the operations discussed. Additionally, the order in which the operations of method 300 are illustrated in FIG. 3A to 3N and described below is not intended to be limiting.

FIG. 3A illustrates a method 300A for implementing access control, in accordance with one or more implementations.

An operation 302 may include detecting a status change of the mobile device. Operation 302 may be performed by one or more hardware processors configured by machine-readable instructions including a module that is the same as or similar to status change detection module 208, in accordance with one or more implementations. The status change may be detected by based on one or more sensors of the mobile device, such as motion or light sensors. For example, step 302 may comprise determining that the mobile device is not stationary. This could be based on motion data from a sensor of the mobile device such as from an accelerometer. Alternatively, or additionally, it may be based on location data and detecting a change in the location data of the mobile device. Such location data may be based on GPS or wireless signals.

An operation 304 may include, upon detecting a status change of the mobile device, triggering logic on the mobile device into a state to monitor for receipt of one or more access control beacons. Operation 304 may be performed by one or more hardware processors configured by machine-readable instructions including a module that is the same as or similar to beacon monitoring module 220, in accordance with one or more implementations.

An operation 306 may include receiving an access control beacon from an access control device. Operation 306 may be performed by one or more hardware processors configured by machine-readable instructions including a module that is the same as or similar to access control beacon receiving module 210, in accordance with one or more implementations.

An operation 308 may include generating an access request based on the received access control beacon. Operation 308 may be performed by one or more hardware processors configured by machine-readable instructions including a module that is the same as or similar to access request generating module 212, in accordance with one or more implementations.

An operation 310 may include transmitting the access request over a wireless communication interface of the mobile device. The wireless communication interface could utilise a short-range wireless protocol, such as BLE or Zigbee or NFC. Alternatively, the wireless protocol could be longer-range, such as Wi-Fi or cellular. Operation 310 may be performed by one or more hardware processors configured by machine-readable instructions including a module that is the same as or similar to access request sending module 214, in accordance with one or more implementations.

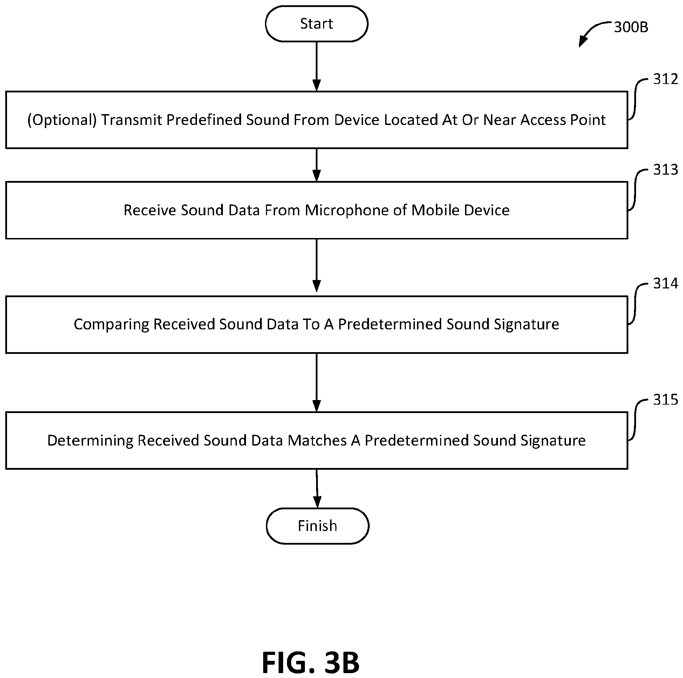

FIG. 3B illustrates a method 300B for detecting a status change of a mobile device using sound detection, in accordance with one or more implementations. For example, method 300B may be performed as all or part of step 302 of method 300A shown in FIG. 3A.

An optional operation 312 may include transmitting a predefined sound from a device located at or near an access point. For example, in some embodiments that device could be an access controller located at or near the access point. The transmitted sound may be quiet (e.g. below a hearing volume threshold) and/or at a non-audible frequency so that users are not able to hear it. The device that transmits the sound may receive some sort of trigger before transmitting the sound, e.g. the device may detect motion prior to transmitting the sound. Alternatively the device may transmit sound periodically, such as at predefined intervals. The predefined intervals could be between 1 second and 30 seconds, more preferably between 2 seconds and 20 seconds. The intervals may be at least 3 seconds and/or less than 15 seconds. In some embodiments, different sounds may be emitted by devices at/near different access points. Thus the sound may be used to indicate or cross-check the identity of the access point. The sound may be transmitted by sound transmittal module 218 of access control device 203.

Step 313 comprises receiving sound data from the microphone of the mobile device. The sound data is indicative of sound waves received at the mobile device, such as at the microphone of the mobile device. Where the method includes step 312, step 313 may comprise receiving sound data indicative of the sound emitted from the device located at or near the access point and then received at the mobile device.

Step 314 comprises matching, or comparing, the received sound data to one or more predetermined sound signature. In some embodiments, a plurality of different sound signatures may be stored, and step 314 may comprise matching or comparing the received sound data to more than one, or all, of the plurality of stored sound signatures.

Step 315 comprises determining that the received sound data matches the predetermined sound signature (or that the sound data matches at least one of the plurality of sound signatures). If there is a match, this may indicate a status change of the mobile device (e.g. that the mobile device has moved close to an access point). Then the method may continue to step 304 of method 300A.

Matching the received sound data to a predetermined sound signature may include identifying the sound data as indicative of the predefined sound transmitted in step 302. Where there are a plurality of access points and different sounds are transmitted for different access points, the method may comprise identifying the corresponding access point based on the sound signature. For example, the identity of the access point may be found from a lookup table linking sound signature to corresponding access points or identifiers of those access points. Identifying the corresponding access point may result in outputting or identifying an identifier of the access point, or an identifier uniquely associated with the access point.

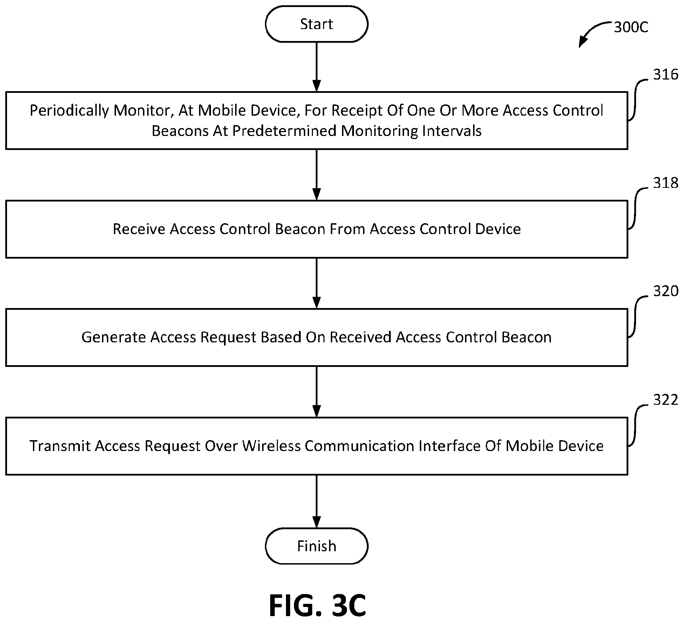

FIG. 3C illustrates a method 300C for generating access requests at a mobile device, in accordance with one or more implementations.

An operation 316 may include periodically monitoring, at the mobile device, for receipt of one or more access control beacons at predetermined monitoring intervals. Operation 316 may be performed by one or more hardware processors configured by machine-readable instructions including a module that is the same as or similar to beacon monitoring module 220, in accordance with one or more implementations.

The monitoring intervals may be adjusted based on various factors, such as location of the mobile device. The monitoring intervals may be at least 5 seconds and not more than 30 minutes in length.

Monitoring may comprise monitoring for receipt for a monitoring time period, wherein the monitoring time periods (or the start of each monitoring time period) are separated by the monitoring interval. The monitoring time periods may be at least 2 seconds, preferably at least 5 seconds or at least 10 seconds. Generally monitoring time periods will be not more than 5 minutes, preferably not more than 2 minutes.

An operation 318 may include receiving an access control beacon from an access control device. Operation 318 may be performed by one or more hardware processors configured by machine-readable instructions including a module that is the same as or similar to access control beacon receiving module 210, in accordance with one or more implementations.

An operation 320 may include generating an access request based on the received access control beacon. Operation 320 may be performed by one or more hardware processors configured by machine-readable instructions including a module that is the same as or similar to access request generating module 212, in accordance with one or more implementations.

An operation 322 may include transmitting the access request over a wireless communication interface of the mobile device. Operation 322 may be performed by one or more hardware processors configured by machine-readable instructions including a module that is the same as or similar to access request transmittal module 214, in accordance with one or more implementations.

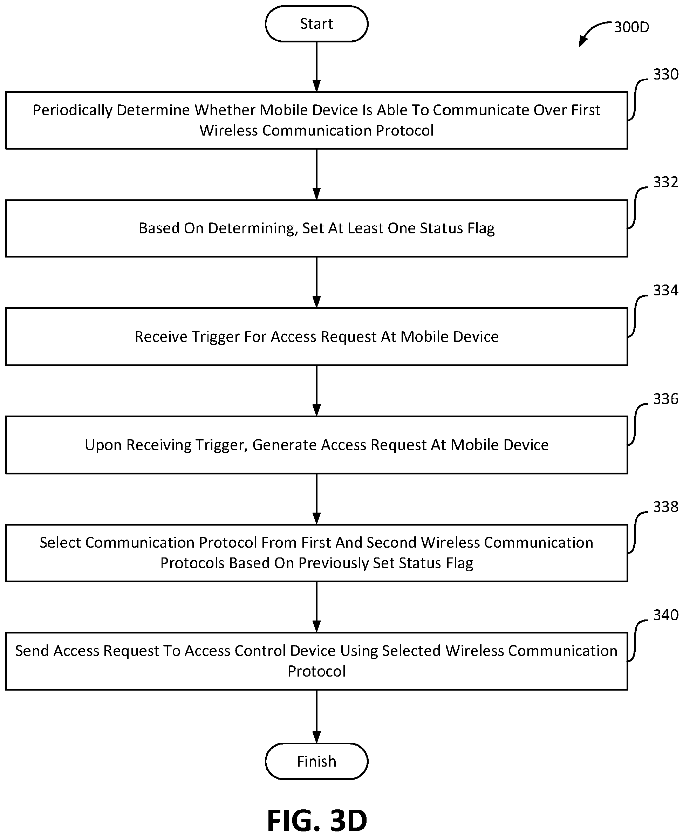

FIG. 3D illustrates method 300D for sending access requests to an access controller, in accordance with one or more implementations. The method 300D may allow a suitable communication protocol for requests to be selected. The communication protocols may be selected from first and second wireless communication protocols. The first wireless communication protocol may be selected from cellular and Wi-Fi and the second wireless communication protocol may be selected from Bluetooth, BLE or NFC

The first wireless communication protocol may be described as a high bandwidth wireless communication protocol and the second wireless communication protocol as a low bandwidth wireless communication protocol. The bandwidth refers to the bit-rate. The high bandwidth may, for example, be selected from mediums or protocols including cellular and Wi-Fi (IEEE 802.11). The low bandwidth could be one of Bluetooth, Bluetooth low energy (BLE) or Near Field Communication (NFC). The high bandwidth medium/protocol may have a bandwidth of at least 2 Mbps, or at least 3 Mbps, more preferably at least 5 Mbps or at least 10Mbps. For example, Wi-Fi (IEEE 802.11) generally has a bandwidth of around 11 Mbps and 4G LTE cellular networks can handle bandwidths of around 10-20 Mbps and 4G LTE-Advanced can handle bandwidth speeds of around 25-40Mbps. The low bandwidth medium/protocol may have a bandwidth of less than 3 Mbps or 2 Mbps, more often not more than around 1.5 Mbps or 1 Mbps. For example, Bluetooth generally has a bandwidth of around 800Kbps

Alternatively the first wireless communication protocol may provide an Internet Protocol- (IP-) based network link and the second wireless communication protocol may provide a short-range data link. The short range data link may use a communication protocol with a wireless range of less than 200m or less than 100m, sometimes even less than 50m or 40m. For example Bluetooth, BLE or NFC. The Internet Protocol- (IP-) based network link may be provided using a long range communication protocol, such as protocols with a range of at least 40m, preferably at least 50m or at least 100m. For example, WLAN or WiFi may be used. In other examples, the long range communication protocol may be capable of longer range communication, such as at least 400m or at least 500m or at least 1km. For example the long range communication protocol could be cellular communication, e.g. GSM, CDMA, 3G, 4G, 5G, 3GPP etc.

Returning to FIG. 3D, the method 300D begins with an operation 330 that may include periodically determining whether the mobile device is able to communicate over the first wireless communication protocol. Determining whether the mobile device is able to communicate may comprise testing the communication protocol, as described further below.

An operation 332 may include based on the determining, setting at least one status flag. The status flag could be a binary flag, indicative of whether communication over the first protocol is possible or not. Operation 332 may be performed by one or more hardware processors configured by machine-readable instructions including a module that is the same as or similar to status flag setting module 228, in accordance with one or more implementations.

An operation 334 may include receiving a trigger for an access request at the mobile device. The trigger could comprise detecting a status change, as described above in relation to step 302 of Figure 3A. Operation 334 may be performed by one or more hardware processors configured by machine-readable instructions including a module that is the same as or similar to trigger receiving module 230, in accordance with one or more implementations.

An operation 336 may include upon receiving the trigger, generating an access request at the mobile device. Operation 336 may be performed by one or more hardware processors configured by machine-readable instructions including a module that is the same as or similar to access request generating module 212, in accordance with one or more implementations.

An operation 338 may include selecting a communication protocol from the first and second wireless communication protocols based on the previously set status flag. Operation 338 may be performed by one or more hardware processors configured by machine-readable instructions including a module that is the same as or similar to communication protocol selection module 232, in accordance with one or more implementations.

An operation 340 may include sending, or transmitting, the access request to an access control device using the selected wireless communication protocol. Operation 340 may be performed by one or more hardware processors configured by machine-readable instructions including a module that is the same as or similar to access request transmittal/sending module 214, in accordance with one or more implementations.

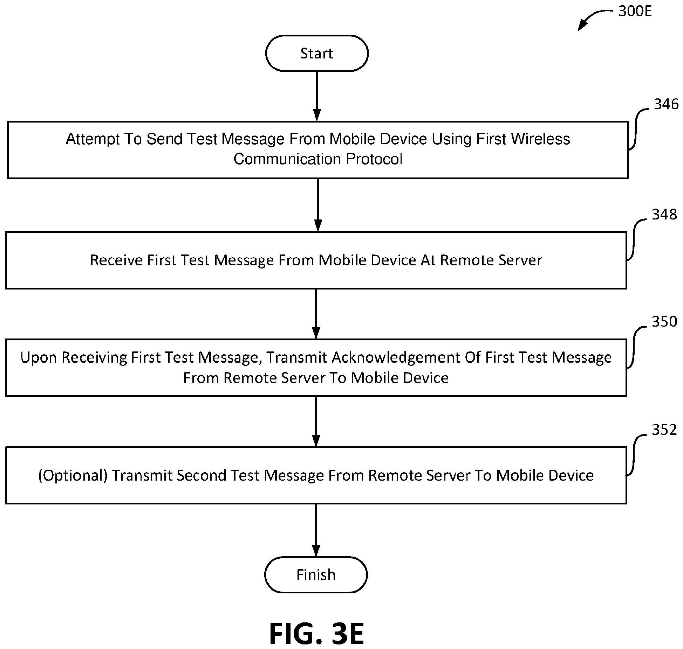

FIG. 3E illustrates method 300E for testing the communication protocols, in accordance with one or more implementations. Some or all steps of the method 300E may be performed as part of step 330 of periodically determining whether the mobile device is able to communicate over the first communication protocol, as described above in relation to method 300D.

At step 346, the mobile device attempts to send a test message using the first wireless communication protocol.

An operation 348 may include receiving the first test message from the mobile device at a remote server. The first test message may have been transmitted over the first wireless communication protocol, but then traverse another communication protocol in order to reach the server. For example, it may be transmitted by the mobile device over a WLAN such as Wi-Fi. The test message may then be transmitted to the remote server via the Internet. Operation 348 may be performed by one or more hardware processors configured by machine-readable instructions including a module that is the same as or similar to test message receiving module 242, in accordance with one or more implementations.

An operation 350 may include upon receiving the first test message, transmitting an acknowledgement of the first test message from the remote server to the mobile device, and subsequently.

An optional step 352 may include transmitting a second test message from the remote server to the mobile device. Operation 352 may be performed by one or more hardware processors configured by machine-readable instructions including a module that is the same as or similar to test message transmittal module 244, in accordance with one or more implementations. The server may wait a predetermined time after transmitting the acknowledgement of the first test message, for example at least 3 minutes, at least 5 minutes or at least 10 minutes, before transmitting the second test message.

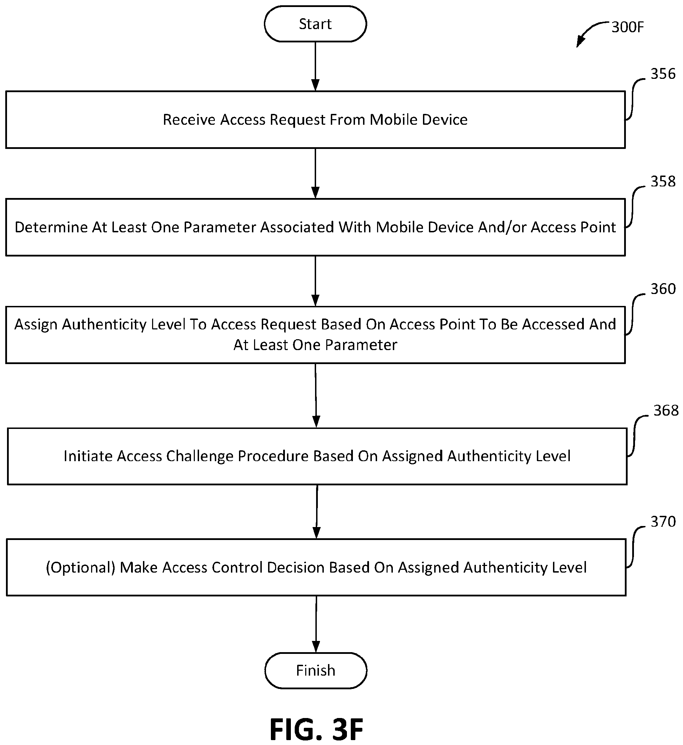

FIG. 3F illustrates a method 300F for identifying the authenticity of access requests, in accordance with one or more implementations. The method 300F may be performed at an access control device or controller associated with a particular access point, or at an access control server. The access control device or controller may be located in the vicinity of the relevant access point, or locally. The access control server may be remote.

An operation 356 may include receiving an access request from the mobile device. The access request may include an identifier indicative of an access point to be accessed. The request may be received via a wireless communication protocol. For example the request may be received over the first wireless communication protocol or the second wireless communication protocol described above. Where the request is received over a longer-range wireless communication protocol (or high bandwidth network) such as a WLAN (e.g. WiFi) or a cellular network, the request may also be transmitted via the Internet. Operation 356 may be performed by one or more hardware processors configured by machine-readable instructions including a module that is the same as or similar to access request receiving module 246, in accordance with one or more implementations.

An operation 358 may include determining at least one parameter associated with the mobile device and/or the access point. The parameter may be indicative of the location of the mobile device or access point and/or be a historical measure based on previous access requests. Operation 358 may be performed by one or more hardware processors configured by machine-readable instructions including a module that is the same as or similar to parameter determination module 248, in accordance with one or more implementations.

An operation 360 may include assigning an authenticity level to the access request based on the access point to be accessed and the at least one parameter. Operation 360 may be performed by one or more hardware processors configured by machine-readable instructions including a module that is the same as or similar to authenticity level assignment module 250, in accordance with one or more implementations.

An operation 368 may include initiating an access challenge procedure based on the assigned authenticity level. Operation 368 may be performed by one or more hardware processors configured by machine-readable instructions including a module that is the same as or similar to access challenge procedure initiation module 258, in accordance with one or more implementations.

An operation 370 may include making an access control decision based on the assigned authenticity level. Upon making an access control decision, an access control command may be performed, such as opening or unlocking the door or gate or access point associated with the access control device. Operation 370 may be performed by one or more hardware processors configured by machine-readable instructions including a module that is the same as or similar to access control decision making module 256, in accordance with one or more implementations.

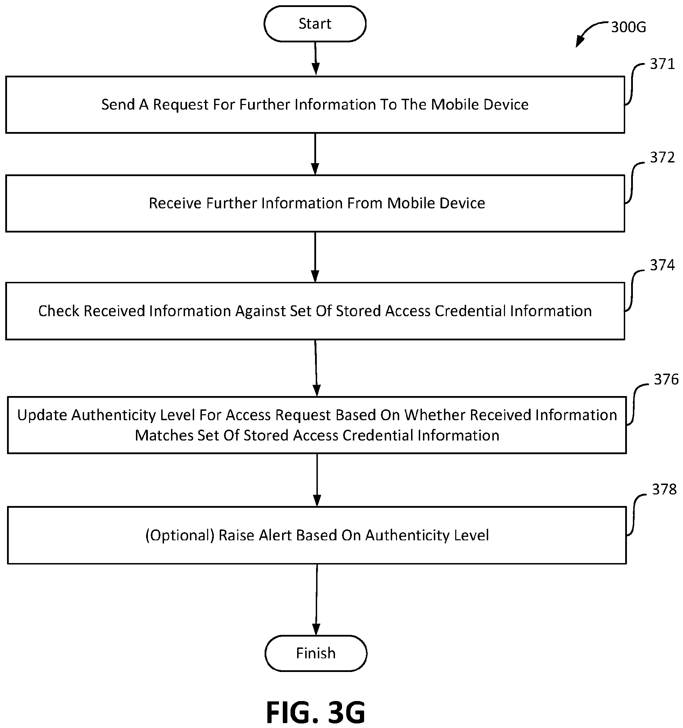

FIG. 3G illustrates a method 300G of challenging the authenticity of the mobile device, in accordance with one or more implementations. For example, this method 300G may be used as challenge procedure of operation 368 in method 300F.

An operation 371 may comprise sending a request for further information to the mobile device. The request may be for further information entered by a user of the mobile device, for further information measured or sensed by the mobile device or for further information already stored on the mobile device. The request may be for further information such as a password or PIN, or some sort of biometric data. Advantageously, the request may request one of a number of possible types of further information. Thus step 371 may comprise selecting, from a plurality of possible types of further information, one or more of the possible types of further information to include in the request for further information. The request for more information may be sent via the same communication protocol on which the access request was received (e.g. in step 356 above).

An operation 372 comprises receiving the further information from the mobile device. The further information may be information previously stored in the mobile device, or may be information input into or recorded by the mobile device in response to the request for further information. For example, the further information may comprise a password or PIN, or some kind of biometric data retrieved from the mobile device, such as a fingerprint or a photo of the user of the mobile device. Alternatively or additionally, the further information may comprise a sound recording, such as a voice recording of the user of the mobile device.

An operation 374 may include checking the received information against a set of stored access credential information. Step 374 may comprise fingerprint, iris, face or voice recognition, depending on the request for further information and/or the information received. Advantageously, the received information may comprise information recorded or input at the mobile device in response to the request for further information. The stored access credential information may include a PIN or password, a picture or several pictures of an authorised user's iris and/or face, images of an authorised user's fingerprint or a recording of an authorised user's voice.

An operation 376 may include updating the authenticity level for the access request based on whether the received information matches the set of stored access credential information. If the received information matches the stored access credential, the authenticity level may be increased. The authenticity level can describe how likely it is the access request originated from a genuine source, such as an authorised user, as opposed to a malicious attack. The authenticity level may be a numerical scale, such as 1 to 5 (where 5 indicates the request is very likely to be a genuine request from an authorised user and 1 indicates the request is very likely to be a malicious attack). Operation 376 may be performed by one or more hardware processors configured by machine-readable instructions including a module that is the same as or similar to authenticity level assignment module 250, in accordance with one or more implementations.

If the authenticity level is above a predetermined level the access request may be allowed, or the requested access operation (generally allowing access at/to the access point) will be performed. Alternatively, for example if the authenticity level is too low or indicates the access request is likely to be indicative of an attack or malicious communication, an operation 378 may include raising an alert based on the authenticity level, e.g. if the authenticity level remains (or drops) below an authenticity alert threshold value. For example an alert may comprise sounding an alarm at the premises, alerting an operator or notifying a security team or personnel. Operation 378 may be performed by one or more hardware processors configured by machine-readable instructions including a module that is the same as or similar to alert raising module 266, in accordance with one or more implementations.

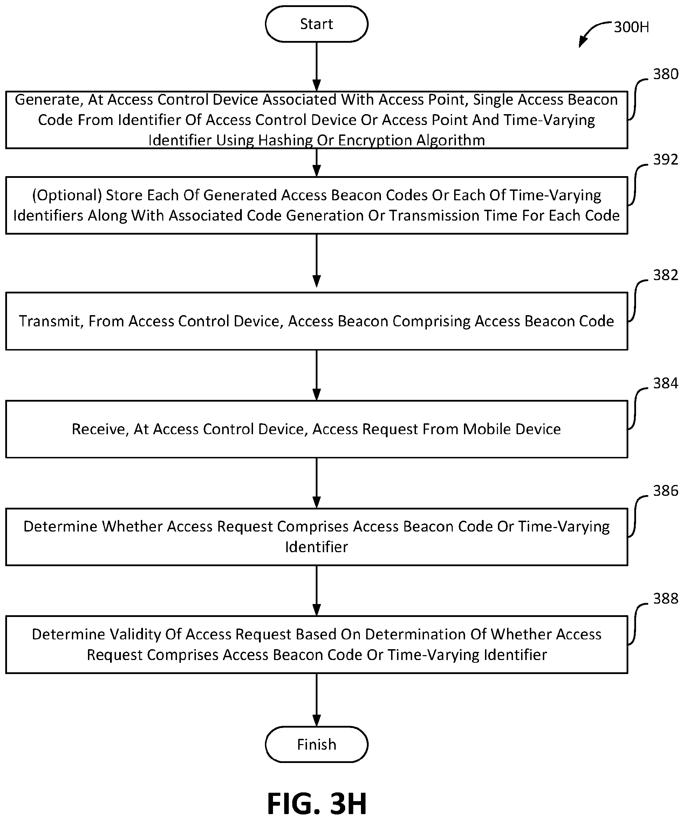

FIG. 3H illustrates a method 300H for validating access requests, in accordance with one or more implementations.

An operation 380 may include generating, at an access control device associated with an access point, a single access beacon code from an identifier of the access control device or access point and a time-varying identifier using a hashing or encryption algorithm. The access control device associated with the access point could be a controller for the access point, such as a door or gate controller. The access control device associated with the access point could be a reader for the access point, which may or may not have control functionality for providing control commands to the access point. The access control device associated with the access point is generally associated at or near the access point, e.g. within 10m or within 5m of the access point. Preferably the access control device is located within 1m of the access point. Operation 380 may be performed by one or more hardware processors configured by machine-readable instructions including a module that is the same as or similar to access beacon code generating module 268, in accordance with one or more implementations.

Generally, hashing is understood to be a one-way function that scrambles the inputs (in this case the ID of the access control device or access point and the time-varying identifier) to produce a unique output. Generally it is not possible to reverse the hash using an algorithm. In contrast, generally encryption is understood to be a two-way function in that an encrypted code can be decrypted to result in the inputs.

An operation 382 may include transmitting, from the access control device, an access beacon including the access beacon code. The access beacon code may be transmitted over a short-range or low bandwidth wireless communication protocol, such as Bluetooth, BLE or UWB. The short-range wireless communication protocol may have a range of up to 100m or up to 50m, for example. In some cases, the transmission of the beacon may be limited to below the maximum achievable by the protocol, such as limited to not more than 50m, preferably not more than 20m, more preferably not more than 10m or 5m. In some cases the range may be limited to not more than 1m or 2m. By having a short-range beacon, security can be improved as devices need to be physically nearby the access point in order to receive the beacon. Operation 382 may be performed by one or more hardware processors configured by machine-readable instructions including a module that is the same as or similar to access beacon transmittal module 270, in accordance with one or more implementations.

An operation 384 may include receiving, at the access control device, an access request from a mobile device. The access request may be received directly from the mobile device, e.g. via a short-range wireless network, or over a multi-hop communication path, such as via wireless network (e.g. WLAN or cellular) and the Internet and then via an access control server and to the access control device via a local wired or wireless (e.g. WLAN) connection to the Internet. Operation 384 may be performed by one or more hardware processors configured by machine-readable instructions including a module that is the same as or similar to access request receiving module 246, in accordance with one or more implementations.

An operation 386 may include determining whether the access request includes the access beacon code or the time-varying identifier. This can indicate that the access request originates from a device that has received the beacon transmitted in step 382, and by inference is/was within wireless communication range of the access point.

An operation 388 may include determining the validity of the access request based on the determination of whether the access request includes the access beacon code or the time-varying identifier. Determining the validity may comprise a simple, or binary, indication of whether the request is valid or not. Alternatively, determining the validity may comprise identifying an authenticity level for the access request, for example a numerical authenticity level as described in relation to step 388 above. If it is determined the access request does comprise the time-varying identifier, determining the validity of the access request may comprise determining how long it has been since the time-varying identifier was generated or last transmitted. If the time is longer than a certain time threshold. the request may be deemed invalid. For example the time threshold may be not more than 5 minutes, preferably not more than 2 minutes or 1 minute, more preferably not more than 30 seconds. If the access request does not include the access beacon code or the time-varying identifier, it may be determined the access request is invalid, and thus the access request may be refused (at least insofar as it relates to the access control device and/or associated access point). Operation 388 may be performed by one or more hardware processors configured by machine-readable instructions including a module that is the same as or similar to validity determination module 274, in accordance with one or more implementations.

Generally the access control device will store each of the generated access beacon codes and/or the time-varying identifier used to generate each of the access beacon codes, along with a time (or times) that each code or time-varying identifier is transmitted and/or generated, as shown if Step 392. In some circumstances, the device will transmit each access beacon code more than once, and so there may be a plurality of times, or time range, stored for the corresponding time-varying identifier or beacon code. The stored time(s) may be used in step 388 to determine whether the access request is valid.

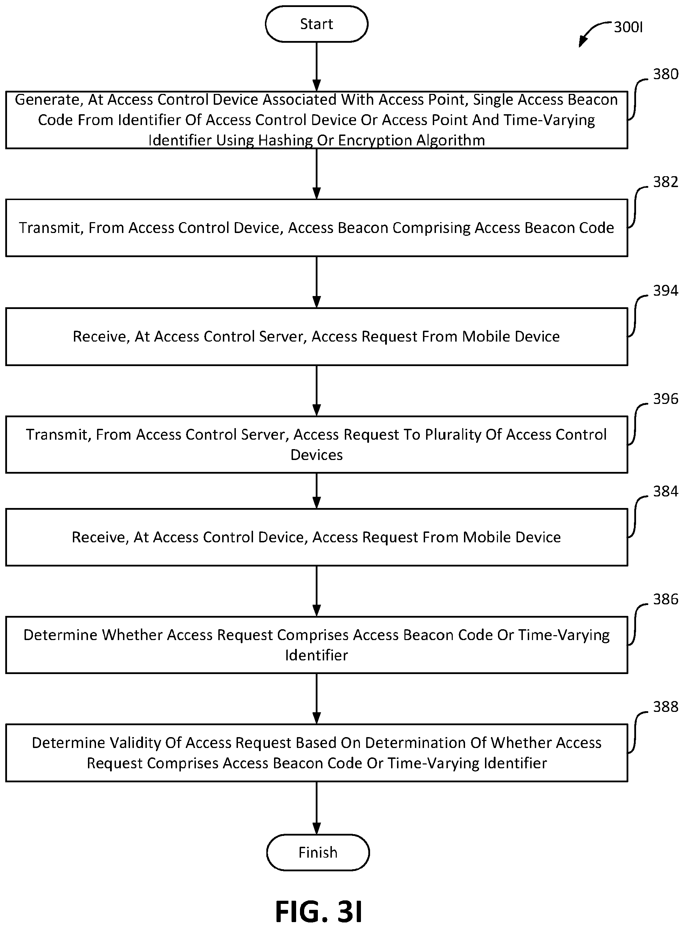

FIG. 3I illustrates a method 3001 for validating access requests which are transmitted via a control server, in accordance with one or more implementations.

Method 3001 starts with steps 380 and 382, as described in relation to method 300H above.

Next, an operation 394 may include receiving, at an access control server, the access request from the mobile device. The request may have been transmitted via a long-range network, such as the Internet.

An operation 396 may include transmitting, from the access control server, the access request to a plurality of access control devices. The access control server may not have the hashing or decryption algorithm required to decipher the identifier of the access point or access control device, so must send the access request to a plurality of access control devices. Operation 396 may be performed by one or more hardware processors configured by machine-readable instructions including a module that is the same as or similar to access request transmittal module 214, in accordance with one or more implementations.

Then at step 384, as described above in relation to method 300H, the access control device receives the access request from the mobile device (in this case via the access control server).

Subsequently, at step 384, as described above in relation to method 300H, the access control device determines whether the access request comprises the access beacon code or time-varying identifier transmitted by that particular access device. If not, the access request may be discarded. For example, the access request may have related to another of the plurality of access control devices to which the request was sent.

Steps 386 and 388 proceed as described above in relation to method 300H.

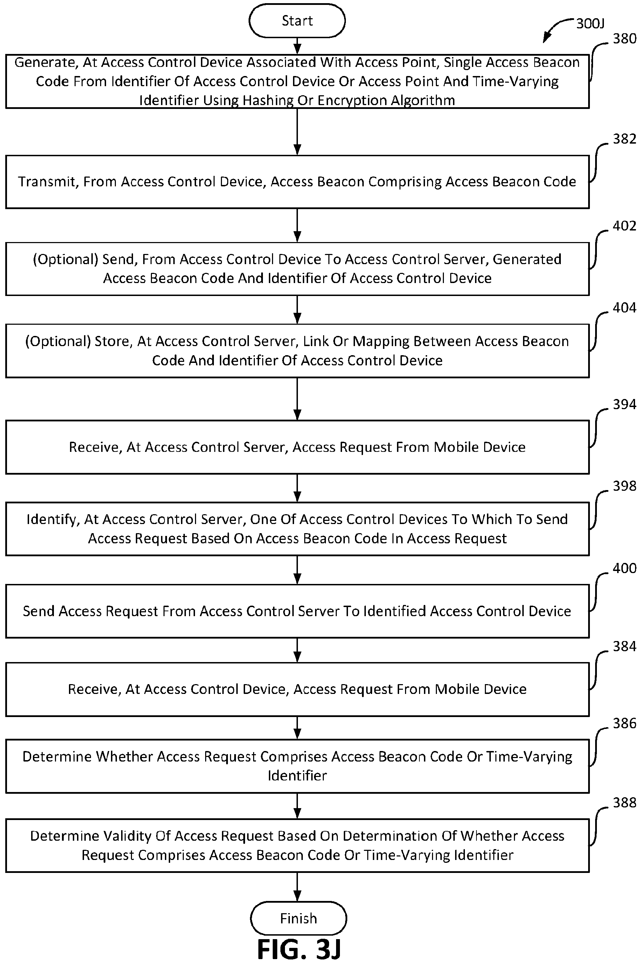

FIG. 3J illustrates an alternative method 300J for validating access requests which are transmitted via a control server, in accordance with one or more implementations.

Method 300J starts with steps 380 and 382, as described in relation to method 300H above.

Next, an operation 394 may include receiving, at an access control server, the access request from the mobile device, as described in relation to method 300I. The request may have been transmitted via a long-range network, such as the Internet.

An operation 398 may include identifying, at the access control server, one of the access control devices to which to send the access request based on the access beacon code in the access request. This may be done by decrypting the access beacon code to find the identifier of the access point or access control device.

An operation 400 may include sending the access request from the access control server to the identified access control device. The access request may be sent by wired or wireless connection. Preferably, the access request is sent via the Internet.

Then at step 384, as described above in relation to method 300H, the access control device receives the access request from the mobile device (in this case via the access control server).

Step 384, as described above in relation to method 300H, may be performed by the access control device to determine whether the access request comprises the access beacon code or time-varying identifier transmitted by that particular access device. However, generally this will have been identified by the server, so this step may be omitted in some embodiments of this method.

Steps 386 and 388 proceed as described above in relation to method 300H.

Optional steps 402 and 404 are shown in method 300J. After the access control device generates the access control beacon code in step 380, it may send (in step 402) a copy of this code, along with an identifier of the access control device, to the access control server. For example, the access control device can send the code to the server via the Internet. In step 404 the access control server may then store a copy of the received code and association or mapping with the access control device, for example in a lookup table. This means the beacon code need not be decryptable and/or the server need not have access to the decryption algorithm in order to identify the access control device, which can improve security.

Thus in this embodiment, the step 398 of identifying the access control device may be done by performing a lookup to identify the access control device from the stored association or mapping.

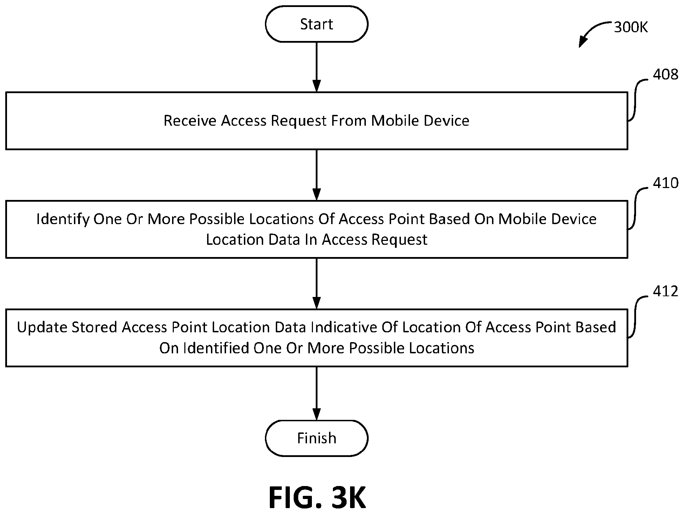

FIG. 3K illustrates a method 300K for monitoring a premises having one or more access points, in accordance with one or more implementations.

An operation 408 may include receiving an access request from a mobile device. The access request may be received at an access control server or at an access control device. The access request may include mobile device location data indicative of the location of the mobile device and data identifying an access point at the premises. The access request may include an identifier indicative of an access point to be accessed. The request may be received via a wireless communication protocol. For example the request may be received over the first wireless communication protocol or the second wireless communication protocol described above. Where the request is received over a longer-range wireless communication protocol (or high bandwidth network) such as a WLAN (e.g. WiFi) or a cellular network, the request may also be transmitted via the Internet. Operation 408 may be performed by one or more hardware processors configured by machine-readable instructions including a module that is the same as or similar to access request receiving module 246, in accordance with one or more implementations.

An operation 410 may include identifying one or more possible locations of the access point based on the mobile device location data in the access request. Generally, it may be assumed that the mobile device is located at or near the access point, so the mobile location data is indicative of the location of the access point. Sometimes it may be assumed the access point is within a radius of the location of the mobile device, for example the radius could be around 1m or around 2m, or even around 5m. Thus the one or more possible locations may be located within that radius. In some embodiments, for example where the access request is received directly from the access point, signal strength, or RSSI, may be used to identify the size of the radius. Operation 410 may be performed by one or more hardware processors configured by machine-readable instructions including a module that is the same as or similar to location identifying module 284, in accordance with one or more implementations.

An operation 412 may include updating stored access point location data indicative of the location of the access point based on the identified one or more possible locations. For example, one or more new possible locations may be added to a stored list of possible locations of the access point. Alternatively, one or more stored possible locations may be ruled out, or removed, from the list of possible stored locations. In some embodiments, a probability or likelihood value for one or more stored possible access point locations may be updated based on the access request. Operation 412 may be performed by one or more hardware processors configured by machine-readable instructions including a module that is the same as or similar to access location identifying module 284, in accordance with one or more implementations. Updating stored access point location data may comprise updating a confidence level for the stored location data, to indicate how likely the stored location data is to be correct.

Location of access points may be determined relative to other access points. For example, differences in locations of mobile devices in access requests at different access points may be used to determine relative locations. Alternatively, this may be used to validate access point locations. For example, if stored access point location data suggests first and second access points are 30m apart and a user's mobile device indicates (e.g. by step-counting) that the user has walked around 35m between generating a first access request for the first access point and a second access request for the second access point, this stored location is likely to be fairly accurate. However if the user's mobile device indicates only 10m have been travelled by the user, this may indicate the stored location is unlikely to be accurate.

A map of the locations or possible locations of each of the plurality of access points at the premises may be built based wholly or partly on data in received access requests.

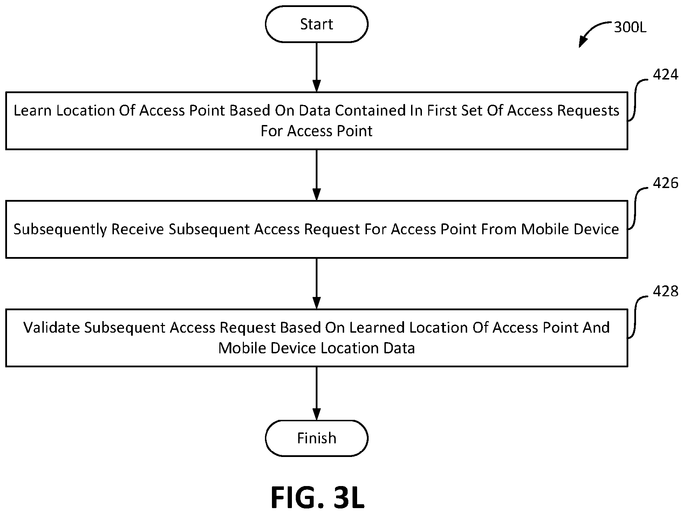

FIG. 3L illustrates a method 300L for validating access requests based on location data, in accordance with one or more implementations.

An operation 424 may include learning the location of the access point based on data contained in a first set of access requests for the access point. For example, this may be done by repetitions of the method 300K, described above. Operation 424 may be performed by one or more hardware processors configured by machine-readable instructions including a module that is the same as or similar to location identifying module 284, in accordance with one or more implementations.

An operation 426 may include subsequently receiving a subsequent access request for the access point from a mobile device. The subsequent access request may include mobile device location data indicative of the location of the mobile device and data identifying the access point. This step may be similar or identical to step 356 of method 300F, described above. Operation 426 may be performed by one or more hardware processors configured by machine-readable instructions including a module that is the same as or similar to access request receiving module 246, in accordance with one or more implementations.

An operation 428 may include validating the subsequent access request based on the learned location of the access point and the mobile device location data. In some embodiments, step 428 comprises performing one or more of the step 358, 360, 368 and 370 described above in relation to method 300F. Operation 428 may be performed by one or more hardware processors configured by machine-readable instructions including a module that is the same as or similar to validity determination module 274, in accordance with one or more implementations.

The first set of requests may need to include a predetermined number of access requests before the learned location can be used to validate the access request. For example, there may need to be at least three, or at least five requests. Alternatively, the confidence level of the learned location of the access point may need to be above a predetermined confidence level before the learned location is used to validate an access request.

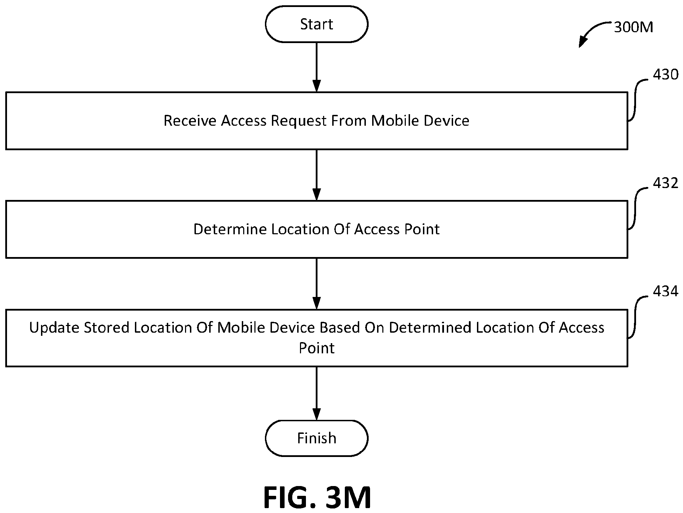

FIG. 3M illustrates a method 300M for monitoring a premises, in accordance with one or more implementations. This method 300M may be performed at an access control server associated with an access control system comprising multiple access points. In alternative embodiments, the method 300M may be performed at an access control device.

An operation 430 may include receiving an access request from a mobile device. The access request may include data identifying an access point at the premises. For example, the access request may comprise an identifier of the access point or an access control device associated with the access point. Alternatively, the access request may comprise an access control beacon code that has been generated from an identifier of the access point.

An operation 432 may include determining the location of the access point. The location of the access point may be determined from stored access point location data. Operation 432 may be performed by one or more hardware processors configured by machine-readable instructions including a module that is the same as or similar to location determination module 222, in accordance with one or more implementations.

An operation 434 may include updating a stored location of the mobile device based on the determined location of the access point. For example, the stored location may be stored at the access control server. Operation 434 may be performed by one or more hardware processors configured by machine-readable instructions including a module that is the same as or similar to location determination module 222, in accordance with one or more implementations.

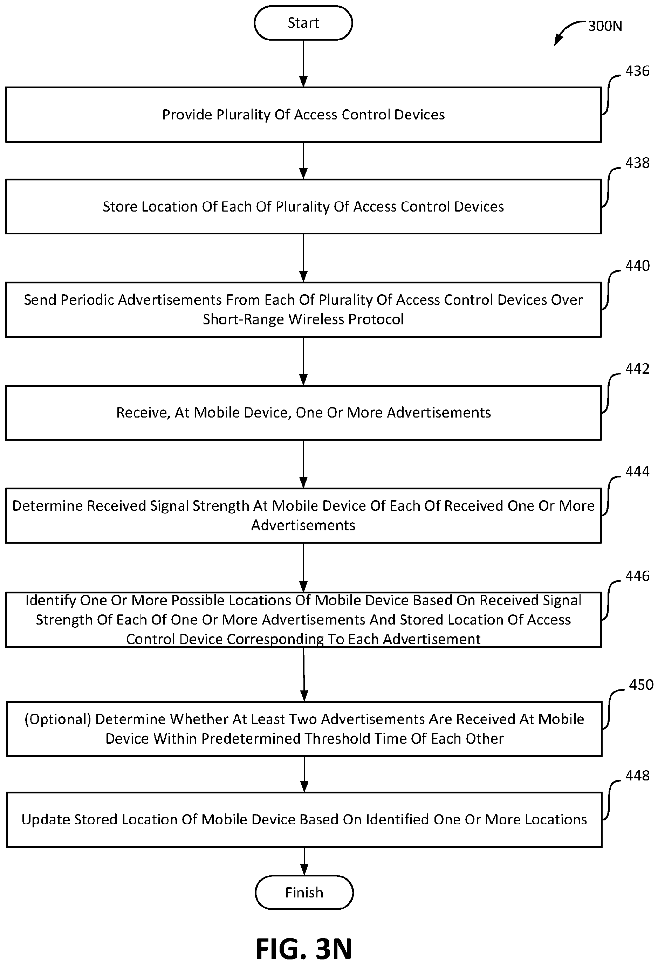

FIG. 3N illustrates a method 300N for monitoring a premises, in accordance with one or more implementations.

An operation 436 may include providing a plurality of access control devices. For example, in some embodiments the access control devices could be an access controller, such as a door or gate controller. The access control devices could be a reader for the access point, which may or may not have control functionality for providing control commands to an access point.

An operation 438 may include storing the location of each of the plurality of access control devices. For example, a table of access control device identifiers may be stored, each mapped to their corresponding location (or a plurality of possible locations, as set out above). Operation 438 may be performed by one or more hardware processors configured by machine-readable instructions including a module that is the same as or similar to location identifying module 284, in accordance with one or more implementations.

An operation 440 may include sending periodic advertisements from each of the plurality of access control devices over a short-range wireless protocol, such as Bluetooth or BLE. Each advertisement may include data identifying the access point from which it is sent, such as an identifier of the access point or access control device, or an access beacon code as described above. The advertisements may be beacons, substantially as described above. Operation 440 may be performed by one or more hardware processors configured by machine-readable instructions including a module that is the same as or similar to access beacon transmittal module 270, in accordance with one or more implementations.

An operation 442 may include receiving, at a mobile device, one or more advertisements. Each advertisement may originate from a different one the plurality of access control devices. In some embodiments, at least two or at least three advertisements, each from a different access control device, are received. Operation 442 may be performed by one or more hardware processors configured by machine-readable instructions including a module that is the same as or similar to access control beacon receiving module 210, in accordance with one or more implementations.

An operation 444 may include determining the received signal strength at the mobile device of each of the received one or more advertisements. Operation 444 may be performed by one or more hardware processors configured by machine-readable instructions including a module that is the same as or similar to signal strength determination module 252, in accordance with one or more implementations.

An operation 446 may include identifying one or more possible locations of the mobile device based on the received signal strength of each of the one or more advertisements and the stored location of the access control device corresponding to each advertisement. This may be performed at a central server (or access control server), rather than at the mobile device. Alternatively, the advertisements may include location data identifying the location of the access control device, and the mobile device may then be able to identify its own location based on the signal strength and received location data. Operation 446 may be performed by one or more hardware processors configured by machine-readable instructions including a module that is the same as or similar to location identifying module 222, in accordance with one or more implementations.

An operation 448 may include updating a stored location of the mobile device based on the identified one or more locations. Operation 448 may be performed by one or more hardware processors configured by machine-readable instructions including a module that is the same as or similar to location determination module 222, in accordance with one or more implementations.

In an optional step 450, the method 300N may include determining whether at least two advertisements are received at the mobile device within a predetermined threshold time of each other.

Then at step 448, the stored location is only updated if the two advertisements are received within a threshold time of one another. The threshold time may be less than 30 seconds, less than 20 seconds or less than 10 seconds. If the at least two advertisements are received at the mobile device within the predetermined threshold time of each other, then at step 448 the stored location of the mobile device would be updated based on those two advertisements.

In some embodiments, where an access request is also received from the mobile, this may be helpful in identifying the location of the mobile device based on signal strength of received adverts or beacons. For example, if advertisements or beacons are received at the mobile device from multiple access devices based on different floors of a building, but the most recent access request from the mobile device indicates the mobile device was seeking access through an access point on one particular floor, then that can be used to eliminate one or more of the potential locations on other floors of the building.

While a specific architecture is shown, any appropriate hardware/software architecture may be employed. For example, external communication may be via a wired network connection.

The above embodiments and examples are to be understood as illustrative examples. Further embodiments, aspects or examples are envisaged. It is to be understood that any feature described in relation to any one embodiment, aspect or example may be used alone, or in combination with other features described, and may also be used in combination with one or more features of any other of the embodiments, aspects or examples, or any combination of any other of the embodiments, aspects or examples. Furthermore, equivalents and modifications not described above may also be employed without departing from the scope of the invention, which is defined in the accompanying claims.

## Claims

1. A method for implementing access control using a mobile device (200) configured to generate access requests, the method comprising:
detecting (302) a status change of the mobile device by:
receiving (312) sound data from a microphone of the mobile device the sound data being a predefined sound transmitted (313) from a device located at an access point, the device being triggered to transmit the predefined sound upon detecting a user interaction;
comparing (314) the received sound data to a predetermined sound signature; and
determining (315) that the sound data matches a predetermined sound signature; the method further comprising:
upon detecting the status change of the mobile device, triggering (304) logic on the mobile device (200) into a state to monitor for receipt of one or more access control beacons;
receiving (306) an access control beacon from an access control device;
generating (308) an access request based on the received access control beacon; and
transmitting (310) the access request over a wireless communication interface of the mobile device (200); wherein
determining the received sound data to a predetermined sound signature comprises identifying the sound data as indicative of the transmitted predefined sound.

2. A method according to claim 1, wherein:
detecting (302) a status change of the mobile device (200) comprises determining that the mobile device (200) is not stationary; and the method further comprises:
upon determining that the mobile device (200) is not stationary, triggering logic on the mobile device (200) into a state to monitor for receipt of one or more access control beacons.

3. A method according to claim 2, wherein determining that the mobile device (200) is not stationary comprises:
receiving motion data from an accelerometer, gyroscope, magnetometer or barometer of the mobile device (200); and
determining that the received motion data is indicative of movement.

4. A method according to claim 2 or claim 3; wherein determining that the mobile device (200) is not stationary comprises:
receiving location data of the mobile device (200); and
determining from the received location data that the mobile device (200) is moving.

5. A method according to any preceding claim, wherein detecting a status change of the mobile device (200) comprises: detecting the mobile device (200) has crossed a geofence.

6. A method for implementing access control according to any preceding claim, wherein the received sound data is outside the audible range, e.g. ultrasonic.

7. A method according to any preceding claim, wherein the mobile device (200) has an application (212) for generating access requests, the application (212) having at least one active state and at least one inactive state, and wherein monitoring for receipt of one or more access control beacons and/or generating the access request is performed by the application (212);

8. A method according to claim 7 wherein the mobile device (200) has an operating system and wherein:
detecting a status change of the mobile device (200) is performed by the operating system.

9. A method according to claim 7 or claim 8, wherein upon detecting a status change of the mobile device (200), the method comprises:
causing the application (212) to transition from an inactive to an active state.

10. A method according to any preceding claim, wherein the access request is received from the mobile device (200) at an access control device (203) via device-to-device communication.

11. A method according to any one of claims 1 to 9, wherein the access request is sent from the mobile device (200) to an access control server (204), the method further comprising:
receiving (394), at the access control server (204), the access request from the mobile device (200); and
transmitting (396), from the access control server (204), the access request to one or a plurality of access control devices (203).

12. A method according to any preceding claim, wherein the access control beacons are wireless beacons, for example short range wireless beacons such as Bluetooth (IEEE 802.15.1), Bluetooth Low Energy, or i Beacons; and/or
wherein the access control beacon comprises an identifier (or encrypted or hashed version thereof) of the access control device (203); and wherein generating an access request is based on the identifier (or encrypted or hashed version thereof) of the access control device (203); and/or
wherein generating an access request is based on an identifier of the mobile device (200) or of the user of the mobile device (200).

13. A computer-readable medium comprising instructions which, when executed by a computer, cause the computer to carry out the method of any preceding claim.

14. A mobile device comprising (200):
a memory, preferably storing an identifier of the mobile device (200) and/or an access control application (212) for generating access requests;
a communication interface; and
a processor; wherein the mobile device (200) is configured to perform the method of any of claim 1 to 12.

15. An access control system comprising:
a mobile device (200) according to claim 14; and
an access control device (203) comprising:
a memory;
a communication interface; and
a processor;
preferably wherein the access control device (203) is configured to transmit access control beacons.

## Patentansprüche

1. Verfahren zum Implementieren einer Zugriffssteuerung unter Verwendung einer mobilen Vorrichtung (200), die zum Erzeugen von Zugriffsanforderungen eingerichtet ist, wobei das Verfahren aufweist:
Erkennen (302) einer Statusänderung der mobilen Vorrichtung durch:
Empfangen (312) von Tondaten von einem Mikrofon der mobilen Vorrichtung, wobei es sich bei den Tondaten um einen vordefinierten Ton handelt, der von einer an einem Zugriffspunkt befindlichen Vorrichtung übertragen wird (313), wobei die Vorrichtung ausgelöst wird, um den vordefinierten Ton beim Erkennen einer Benutzerinteraktion zu übertragen;
Vergleichen (314) der empfangenen Tondaten mit einer vorbestimmten Tonsignatur; und
Bestimmen (315), dass die Tondaten mit einer vorbestimmten Tonsignatur übereinstimmen; wobei das Verfahren weiter aufweist:
beim Erkennen der Statusänderung der mobilen Vorrichtung Auslösen (304) der Logik auf der mobilen Vorrichtung (200) in einen Zustand zur Überwachung des Empfangs von einem oder mehreren Zugriffssteuerungsbaken;
Empfangen (306) einer Zugriffssteuerungsbake von einer Zugriffssteuerungsvorrichtung;
Erzeugen (308) einer Zugriffsanforderung auf der Grundlage der empfangenen Zugriffssteuerungsbake; und
Übertragen (310) der Zugriffsanforderung über eine drahtlose Kommunikationsschnittstelle der mobilen Vorrichtung (200); wobei
Bestimmen der empfangenen Tondaten zu einer vorbestimmten Tonsignatur die Identifizierung der Tondaten als Hinweis auf den übertragenen vordefinierten Ton aufweist.

2. Verfahren nach Anspruch 1, wobei:
Erkennen (302) einer Statusänderung der mobilen Vorrichtung (200) das Bestimmen aufweist, dass die mobile Vorrichtung (200) nicht stationär ist; und das Verfahren ferner aufweist:
beim Bestimmen, dass die mobile Vorrichtung (200) nicht stationär ist, Auslösen einer Logik auf der mobilen Vorrichtung (200) in einen Zustand zur Überwachung des Empfangs von einem oder mehreren Zugriffssteuerungsbaken.

3. Verfahren nach Anspruch 2, wobei die Bestimmung, dass die mobile Vorrichtung (200) nicht stationär ist, aufweist:
Empfangen von Bewegungsdaten von einem Beschleunigungsmesser, Gyroskop, Magnetometer oder Barometer der mobilen Vorrichtung (200); und
Bestimmen, dass die empfangenen Bewegungsdaten auf eine Bewegung hindeuten.

4. Verfahren nach Anspruch 2 oder 3, wobei die Bestimmung, dass die mobile Vorrichtung (200) nicht stationär ist, aufweist:
Empfangen von Standortdaten der mobilen Vorrichtung (200); und
Bestimmen aus den empfangenen Standortdaten, dass sich die mobile Vorrichtung (200) bewegt.

5. Verfahren nach einem der vorhergehenden Ansprüche, wobei das Erkennen einer Statusänderung der mobilen Vorrichtung (200) aufweist: Erkennen, dass die mobile Vorrichtung (200) einen Geofence überschritten hat.

6. Verfahren zur Durchführung einer Zugriffssteuerung nach einem der vorhergehenden Ansprüche, wobei die empfangenen Tondaten außerhalb des hörbaren Bereichs liegen, z.B. im Ultraschallbereich.

7. Verfahren nach einem der vorhergehenden Ansprüche, wobei die mobile Vorrichtung (200) eine Anwendung (212) zum Erzeugen von Zugriffsanforderungen hat, wobei die Anwendung (212) mindestens einen aktiven Zustand und mindestens einen inaktiven Zustand hat, und wobei die Überwachung auf den Empfang eines oder mehrerer Zugriffssteuerungsbaken und/oder das Erzeugen der Zugriffsanforderung von der Anwendung (212) durchgeführt wird.

8. Verfahren nach Anspruch 7, wobei die mobile Vorrichtung (200) ein Betriebssystem hat und wobei:
Erkennen einer Statusänderung der mobilen Vorrichtung (200) durch das Betriebssystem durchgeführt wird.

9. Verfahren nach Anspruch 7 oder Anspruch 8, wobei das Verfahren beim Erkennen einer Statusänderung der mobilen Vorrichtung (200) aufweist:
Veranlassen des Übergangs der Anwendung (212) von einem inaktiven zu einem aktiven Zustand.

10. Verfahren nach einem der vorhergehenden Ansprüche, wobei die Zugriffsanforderung von der mobilen Vorrichtung (200) an einer Zugriffssteuerungsvorrichtung (203) über eine Vorrichtung-zu-Vorrichtung-Kommunikation empfangen wird.

11. Verfahren nach einem der Ansprüche 1 bis 9, wobei die Zugriffsanforderung von der mobilen Vorrichtung (200) an einen Zugriffssteuerungsserver (204) gesendet wird, wobei das Verfahren weiter aufweist:
Empfangen (394) der Zugriffsanforderung von der mobilen Vorrichtung (200) am Zugriffssteuerungsserver (204); und
Übertragen (396) der Zugriffsanforderung von dem Zugriffssteuerungsserver (204) an eine oder mehrere Zugriffssteuerungsvorrichtungen (203).

12. Verfahren nach einem der vorhergehenden Ansprüche, wobei die Zugriffssteuerungsbaken drahtlose Baken sind, zum Beispiel drahtlose Baken mit kurzer Reichweite wie Bluetooth (IEEE 802.15.1), Bluetooth Low Energy oder i Beacons; und/oder
wobei die Zugriffssteuerungsbake eine Kennung (oder eine verschlüsselte oder gehashte Version davon) der Zugriffssteuerungsvorrichtung (203) aufweist; und wobei die Erzeugung einer Zugriffsanforderung auf der Kennung (oder einer verschlüsselten oder gehashten Version davon) der Zugriffssteuerungsvorrichtung (203) basiert; und/oder
wobei das Erzeugen einer Zugriffsanforderung auf einer Kennung der mobilen Vorrichtung (200) oder des Benutzers der mobilen Vorrichtung (200) basiert.

13. Computerlesbares Medium, das Befehle aufweist, die, wenn sie von einem Computer ausgeführt werden, den Computer veranlassen, das Verfahren nach einem der vorhergehenden Ansprüche auszuführen.

14. Mobile Vorrichtung (200), die aufweist:
einen Speicher, in dem vorzugsweise eine Kennung der mobilen Vorrichtung (200) und/oder eine Zugriffssteuerungsanwendung (212) zur Erzeugung von Zugriffsanforderungen gespeichert ist;
eine Kommunikationsschnittstelle; und
einen Prozessor; wobei die mobile Vorrichtung (200) dazu eingerichtet ist, das Verfahren nach einem der Ansprüche 1 bis 12 durchzuführen.

15. Zugriffssteuerungssystem, das aufweist:
eine mobile Vorrichtung (200) nach Anspruch 14; und
eine Zugriffssteuerungsvorrichtung (203), die aufweist:
einen Speicher;
eine Kommunikationsschnittstelle; und
einen Prozessor;
wobei die Zugriffssteuerungsvorrichtung (203) vorzugsweise dazu eingerichtet ist, Zugriffssteuerungsbaken zu übertragen.

## Revendications

1. Procédé de mise en oeuvre d'un contrôle d'accès utilisant un appareil mobile (200) configuré pour générer des demandes d'accès, le procédé comprenant :
la détection (302) d'un changement de statut de l'appareil mobile par :
réception (312) de données sonores en provenance d'un microphone de l'appareil mobile, les données sonores étant un son prédéfini transmis (313) par un appareil situé à un point d'accès, la transmission par le dispositif du son prédéfini étant déclenchée lors de la détection d'une interaction d'utilisateur ;
comparaison (314) des données sonores reçues à une signature sonore prédéterminée ; et
détermination (315) que les données sonores correspondent à une signature sonore prédéterminée ; le procédé comprenant en outre :
lors de la détection du changement de statut de l'appareil mobile, le déclenchement (304) du passage d'une logique sur l'appareil mobile (200) dans un état destiné à surveiller la réception d'une ou plusieurs balises de contrôle d'accès ;
la réception (306) d'une balise de contrôle d'accès en provenance d'un dispositif de contrôle d'accès ;
la génération (308) d'une demande d'accès sur la base de la balise de contrôle d'accès reçue ; et
la transmission (310) de la demande d'accès sur une interface de communication sans fil de l'appareil mobile (200) ; dans lequel
la détermination que les données sonores correspondent à une signature sonore prédéterminée comprend l'identification des données sonores comme indiquant le son prédéfini transmis.

2. Procédé selon la revendication 1, dans lequel :
la détection (302) d'un changement de statut de l'appareil mobile (200) comprend la détermination que l'appareil mobile (200) n'est pas fixe ; et le procédé comprend en outre :
lors de la détermination que l'appareil mobile (200) n'est pas fixe, le déclenchement du passage d'une logique sur l'appareil mobile (200) dans un état destiné à surveiller la réception d'une ou plusieurs balises de contrôle d'accès.

3. Procédé selon la revendication 2, dans lequel la détermination que l'appareil mobile (200) n'est pas fixe comprend :
la réception de données de mouvement en provenance d'un accéléromètre, d'un gyroscope, d'un magnétomètre ou d'un baromètre de l'appareil mobile (200) ; et
la détermination que les données de mouvement indiquent un déplacement.

4. Procédé selon la revendication 2 ou la revendication 3, dans lequel la détermination que l'appareil mobile (200) n'est pas fixe comprend :
la réception de données de localisation de l'appareil mobile (200) ; et
la détermination, à partir des données de localisation reçues, que l'appareil mobile (200) se déplace.

5. Procédé selon une quelconque revendication précédente, dans lequel la détection d'un changement de statut de l'appareil mobile (200) comprend : la détection que l'appareil mobile (200) a franchi un périmètre virtuel.

6. Procédé de mise en oeuvre d'un contrôle d'accès selon une quelconque revendication précédente, dans lequel les données sonores reçues sont en dehors de la gamme des fréquences audibles, par exemple des ultrasons.

7. Procédé selon une quelconque revendication précédente, dans lequel l'appareil mobile (200) possède une application (212) pour générer des demandes d'accès, l'application (212) ayant au moins un état actif et au moins un état inactif, et dans lequel la surveillance de la réception d'une ou plusieurs balises de contrôle d'accès et/ou la génération de la demande d'accès est réalisée par l'application (212).

8. Procédé selon la revendication 7, dans lequel l'appareil mobile (200) possède un système d'exploitation et dans lequel :
la détection d'un changement de statut de l'appareil mobile (200) est réalisée par le système d'exploitation.

9. Procédé selon la revendication 7 ou la revendication 8, dans lequel, lors de la détection d'un changement de statut de l'appareil mobile (200), le procédé comprend :
le fait d'amener l'application (212) à passer d'un état inactif à un état actif.

10. Procédé selon une quelconque revendication précédente, dans lequel la demande d'accès est reçue en provenance de l'appareil mobile (200) au niveau d'un dispositif de contrôle d'accès (203) via une communication de dispositif à dispositif.

11. Procédé selon l'une quelconque des revendications 1 à 9, dans lequel la demande d'accès est envoyée de l'appareil mobile (200) à un serveur de contrôle d'accès (204), le procédé comprenant en outre :
la réception (394), au niveau du serveur de contrôle d'accès (204), de la demande d'accès en provenance de l'appareil mobile (200) ; et
la transmission (396), à partir du serveur de contrôle d'accès (204), de la demande d'accès à un ou à une pluralité de dispositifs de contrôle d'accès (203).

12. Procédé selon une quelconque revendication précédente, dans lequel les balises de contrôle d'accès sont des balises sans fil, par exemple des balises sans fil à courte portée telles que des balises Bluetooth (IEEE 802.15.1), Bluetooth Low Energy ou iBeacon ; et/ou
dans lequel la balise de contrôle d'accès comprend un identifiant (ou une version chiffrée ou hachée de celui-ci) du dispositif de contrôle d'accès (203) ; et dans lequel la génération d'une demande d'accès est basée sur l'identifiant (ou une version chiffrée ou hachée de celui-ci) du dispositif de contrôle d'accès (203) ; et/ou
dans lequel la génération d'une demande d'accès est basée sur un identifiant de l'appareil mobile (200) ou de l'utilisateur de l'appareil mobile (200).

13. Support lisible par ordinateur comprenant des instructions qui, lorsqu'elles sont exécutées par un ordinateur, amènent l'ordinateur à mettre en oeuvre le procédé selon une quelconque revendication précédente.

14. Appareil mobile (200) comprenant :
une mémoire, stockant de préférence un identifiant de l'appareil mobile (200) et/ou une application de contrôle d'accès (212) pour générer des demandes d'accès ;
une interface de communication ; et
un processeur; dans lequel l'appareil mobile (200) est configuré pour réaliser le procédé selon l'une quelconque des revendications 1 à 12.

15. Système de contrôle d'accès comprenant :
un appareil mobile (200) selon la revendication 14 ; et
un dispositif de contrôle d'accès (203) comprenant :
une mémoire ;
une interface de communication ; et
un processeur ;
de préférence dans lequel le dispositif de contrôle d'accès (203) est configuré pour transmettre des balises de contrôle d'accès.
